# EUROPEAN PATENT APPLICATION

(11) **EP 4 749 910 A1**
(43) Date of publication of application: **27.05.2026**
(21) Application number: 24850631.3
(22) Date of filing: 22.05.2024
(51) Int. Cl.: H02M 7/487, H02M 1/38, H02M 7/5387

(54) **POWER CONVERTER AND CONTROL METHOD THEREFOR**

(30) Priority: 07.08.2023 CN 202310987600
(71) Applicant: Huawei Digital Power Technologies Co., Ltd., Shenzhen, Guangdong 518043 (CN)
(72) Inventor: LI, Junjie, Shenzhen, Guangdong 518043 (CN); YU, Xinyu, Shenzhen, Guangdong 518043 (CN); XIN, Kai, Shenzhen, Guangdong 518043 (CN); ZHENG, Shengnan, Shenzhen, Guangdong 518043 (CN)
(74) Representative: Maiwald GmbH
(86) International application number: PCT/CN2024/094634
(87) International publication number: WO 2025/030978

(57) **Abstract**

A power converter and a control method therefor are provided. The power converter includes a power conversion circuit, an output inductor, and a controller. Each half bridge arm in an upper half bridge arm and a lower half bridge arm included in the power conversion circuit includes at least two switching transistors. The controller is configured to generate a carrier wave and a modulated wave, and generate, based on the carrier wave and the modulated wave, control signals for controlling the switching transistors of the upper half bridge arm and the switching transistors of the lower half bridge arm. The controller is further configured to: when the carrier wave is in a zero-crossing point region, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in a zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the zero-crossing point region. In this way, stress of the switching transistor is reduced.

## Description

This application claims priority to Chinese Patent Application No. 202310987600.0, filed with the China National Intellectual Property Administration on August 7, 2023 and entitled "POWER CONVERTER AND CONTROL METHOD THEREFOR", which is incorporated herein by reference in its entirety.

### TECHNICAL FIELD

This application relates to the field of power electronics technologies, and in particular, to a power converter and a control method therefor.

### BACKGROUND

In pulse width modulation (Pulse Width Modulation, PWM), a carrier wave is compared with a modulated wave, and a control signal may be generated based on a comparison result to control a switch device to be turned on or turned off. In this case, a sequence whose pulse width is proportional to an amplitude of the modulated wave is obtained, so that a required signal wave can be obtained. The PWM manner may be implemented by using a natural sampling method and a regular sampling method. In the regular sampling method, an amplitude of a modulated wave corresponding to a specific point (such as a peak point or a zero-crossing point) of a carrier wave is used to replace an amplitude of the modulated wave corresponding to a natural cross point between the carrier wave and the modulated wave, to determine a pulse width, and obtain a required waveform.

When the carrier wave is a triangular wave (or sawtooth wave) and the modulated wave is a sine wave, sinusoidal pulse width modulation (Sinusoidal Pulse Width Modulation, SPWM) can be implemented by comparing the triangular wave and the sine wave. When an SPWM modulation scheme that is based on vertical distribution of a carrier wave is used, the amplitude of the modulated wave is actually discrete. The modulated wave may be loaded at a moment corresponding to the specific point of the carrier wave, and a switch device is controlled to be turned on or turned off based on a comparison result between the carrier wave and the modulated wave, to obtain an SPWM wave. However, in actual application, a change of a voltage frequency of a power grid may cause a corresponding deviation between the modulated wave and the carrier wave, and consequently, a jump occurs in an output level of a multi-level converter. This results in excessive stress of a switching transistor, causing a high probability of damage.

### SUMMARY

This application provides a power converter and a control method therefor, to reduce stress of a switching transistor in the power converter.

According to a first aspect, this application provides a power converter. The power converter includes a power conversion circuit, an output inductor, and a controller, the power conversion circuit includes a power bridge arm, the power bridge arm includes an upper half bridge arm and a lower half bridge arm, each half bridge arm includes at least two switching transistors, and an output end of the power bridge arm is connected to the output inductor; and the controller may be configured to: generate a carrier wave and a modulated wave, and generate, based on the carrier wave and the modulated wave, control signals for controlling the switching transistors of the upper half bridge arm and the switching transistors of the lower half bridge arm. Herein, the power converter may include various converters of a three-level topology and a five-level topology. The modulated wave may include a sine wave, and the carrier wave may include a triangular wave.

The controller may be further configured to: when the carrier wave is in a zero-crossing point region, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in a zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the zero-crossing point region, where the zero-crossing point region includes an interval in which an amplitude of the carrier wave is less than or equal to a cross value, and the cross value is an amplitude of a cross point that is between the carrier wave and the modulated wave and that is closest to a zero-crossing point of the carrier wave. Herein, the amplitude of the carrier wave/modulated wave may represent a longitudinal distance between any point of the carrier wave/modulated wave and an origin of a coordinate axis.

In this case, when the carrier wave is in the zero-crossing point region, the switching transistors of the upper half bridge arm or the switching transistors of the lower half bridge arm in the switching transistors of the upper and lower half bridge arms perform an action in this period, and the switching transistors of the other half bridge arm do not perform an action. In this way, this can avoid a large level jump of an output level of the power converter caused by the switching transistors of both the upper half bridge arm and lower half bridge arm performing an action in the zero-crossing point region (for example, a direct jump from a positive level to a negative level or a direct jump from a negative level to a positive level in an output level of a three-level converter), thereby reducing stress of the switching transistor in the power converter.

In a feasible implementation, the controller may be further configured to: when the carrier wave is in the zero-crossing point region and the modulated wave is about to undergo zero-crossing switching, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in the zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the zero-crossing point region, where the zero-crossing point region includes the interval in which the amplitude of the carrier wave is less than or equal to the cross value, the cross value is the amplitude of the cross point that is between the carrier wave and the modulated wave and that is closest to the zero-crossing point of the carrier wave, and an amplitude of the modulated wave is less than a specified threshold when the modulated wave is about to undergo zero-crossing switching. Herein, the specified threshold may be determined based on an actual situation. The specified threshold is less than a largest value in absolute values of differences between amplitudes of two adjacent square waves in a plurality of square waves, or the specified threshold is less than or equal to an amplitude of a square wave whose amplitude is the smallest in a plurality of square waves. When the amplitude of the modulated wave is less than the specified threshold, the modulated wave is about to enter a negative half period from a positive half period or enter a positive half period from a negative half period, that is, is about to undergo zero-crossing switching.

In this case, when the carrier wave is in the zero-crossing point region and the modulated wave is about to undergo zero-crossing switching, the switching transistors of the upper half bridge arm or the switching transistors of the lower half bridge arm in the switching transistors of the upper and lower half bridge arms are controlled to perform an action in this period, and the switching transistors of the other half bridge arm do not perform an action. In this way, no large jump occurs in the output level of the power converter (for example, an output level of a three-level converter changes from a zero level to a positive level or from a zero level to a positive level), thereby greatly reducing stress of the switching transistor, prolonging a service life of the switching transistor, and improving safety and reliability of the power converter.

In a feasible implementation, the carrier wave is a triangular wave, the modulated wave is a sine wave, the sine wave includes a plurality of discrete square waves, amplitudes of two adjacent square waves in the plurality of square waves are different, and a switching moment between the two adjacent square waves is a loading moment. Herein, any square wave is a waveform whose amplitude remains unchanged. The controller may be configured to output a high-level control signal in response to the amplitude of the modulated wave being greater than the amplitude of the carrier wave. Herein, when the controller outputs the high-level control signal, a specific switching transistor in the power converter is turned on. For example, an external transistor Q1 or an external transistor Q4 in a three-level ANPC topology is turned on. For another example, an external transistor Q1 or an external transistor Q4 in a three-level NPC topology is turned on.

The controller may be further configured to: in response to the modulated wave being to undergo polarity switching at a predetermined first loading moment and an amplitude of the carrier wave being zero at the first loading moment, control the modulated wave not to be loaded at the first loading moment, and control the modulated wave to be loaded at a second loading moment, where the second loading moment is a moment at which the carrier wave reaches a peak point for the first time after the first loading moment. Polarity switching of the modulated wave means that zero-crossing switching occurs on the modulated wave, a switching moment between two adjacent square waves in a plurality of square waves included in a modulated wave is a loading moment, and the modulated wave corresponds to a plurality of predetermined loading moments. In this way, in Case (1), the carrier wave is at the peak point during zero-crossing switching of the modulated wave, and smooth switching occurs in the output level of the power converter during zero-crossing switching of the modulated wave, thereby avoiding a large level jump, reducing stress of the switching transistor in the power converter, reducing a possibility of damage to the switching transistor, and improving safety and reliability of the power converter.

In a feasible implementation, the power conversion circuit is connected in parallel between a positive direct current bus and a negative direct current bus, the upper half bridge arm and the lower half bridge arm each include two switching transistors connected in series, the power conversion circuit further includes two clamp switching transistors, and the two clamp switching transistors are connected in series and then in parallel between a series connection point between the two switching transistors of the upper half bridge arm and a series connection point between the two switching transistors of the lower half bridge arm; and when the carrier wave is in the zero-crossing point region, a voltage between a series connection point between the upper half bridge arm and the lower half bridge arm and a series connection point between the two clamp switching transistors is half of a voltage between the positive direct current bus and the negative direct current bus or zero. In this case, the power converter may be a three-level ANPC converter. When the carrier wave is in a zero-crossing point region and the modulated wave is about to undergo zero-crossing switching, the output level of the power converter is a positive level or a zero level; or the output level of the power converter is a negative level or a zero level. In the power conversion circuit, a voltage between a series connection point between an upper half bridge arm and a lower half bridge arm and a series connection point between two clamp switching transistors is half of a voltage between the positive direct current bus and the negative direct current bus or zero. In this way, when the carrier wave is in the zero-crossing point region and the modulated wave is about to undergo zero-crossing switching, no large level jump occurs in the output level of the power converter, thereby reducing stress of the switching transistor in the power converter.

In a feasible implementation, the power conversion circuit is connected in parallel between a positive direct current bus and a negative direct current bus, the upper half bridge arm and the lower half bridge arm each include two switching transistors connected in series, the power conversion circuit further includes two clamp diodes, and the two clamp diodes are connected in series and then in parallel between a series connection point between the two switching transistors of the upper half bridge arm and a series connection point between the two switching transistors of the lower half bridge arm; and when the carrier wave is in the zero-crossing point region, a voltage between a series connection point between the upper half bridge arm and the lower half bridge arm and a series connection point between the two clamp diodes is half of a voltage between the positive direct current bus and the negative direct current bus or zero. In this case, the power converter may be a three-level NPC converter. When the carrier wave is in a zero-crossing point region and the modulated wave is about to undergo zero-crossing switching, the output level of the power converter is a positive level or a zero level; or the output level of the power converter is a negative level or a zero level. In the power conversion circuit, a voltage between a series connection point between an upper half bridge arm and a lower half bridge arm and a series connection point between two clamp switching transistors is half of a voltage between the positive direct current bus and the negative direct current bus or zero. In this way, when the carrier wave is in the zero-crossing point region and the modulated wave is about to undergo zero-crossing switching, no large level jump occurs in the output level of the power converter, thereby reducing stress of the switching transistor in the power converter.

In a feasible implementation, one carrier wave period includes N loading moments of the modulated wave, where N is 1 or an even number greater than or equal to 2. That is, a loading manner of the modulated wave may be n-frequency loading. When the modulated wave is loaded in different manners, the output level of the converter does not send a large level jump when the carrier wave is in the zero-crossing point region. Therefore, the output level may undergo smooth switching during zero-crossing switching of the modulated wave, thereby reducing voltage stress of the switching transistor in the power converter, reducing a possibility of damage to the switching transistor, and improving circuit reliability.

According to a second aspect, this application provides a power converter. The power converter includes a power conversion circuit, an output inductor, and a controller. The power conversion circuit includes a power bridge arm, the power bridge arm includes an upper half bridge arm and a lower half bridge arm, each half bridge arm includes at least two switching transistors, and an output end of the power bridge arm is connected to the output inductor. The controller is configured to: generate a carrier wave and a modulated wave, and generate, based on the carrier wave and the modulated wave, control signals for controlling the switching transistors of the upper half bridge arm and the switching transistors of the lower half bridge arm. The controller is further configured to: when the carrier wave is in a peak point region, control a switching transistor of the upper half bridge arm to keep an on/off switching state unchanged when the carrier wave is in a zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in a zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the peak point region, where the peak point region includes an interval in which an amplitude of the carrier wave is greater than or equal to a cross value, and the cross value is an amplitude of a cross point that is between the carrier wave and the modulated wave and that is closest to a peak point of the carrier wave.

In a feasible implementation, the controller is further configured to: when the carrier wave is in the peak point region and the modulated wave is about to undergo zero-crossing switching, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in the zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the peak point region, where the peak point region includes the interval in which the amplitude of the carrier wave is greater than or equal to the cross value, the cross value is the amplitude of the cross point that is between the carrier wave and the modulated wave and that is closest to the peak point of the carrier wave, and an amplitude of the modulated wave is less than a specified threshold when the modulated wave is about to undergo zero-crossing switching.

In a feasible implementation, the carrier wave is a triangular wave, the modulated wave is a sine wave, the sine wave includes a plurality of discrete square waves, amplitudes of two adjacent square waves in the plurality of square waves are different, and a switching moment between the two adjacent square waves is a loading moment.

The controller is configured to output a high-level control signal in response to the amplitude of the modulated wave being less than the amplitude of the carrier wave.

The controller is further configured to: in response to the modulated wave being to undergo polarity switching at a predetermined first loading moment and an amplitude of the carrier wave being a peak at the first loading moment, control the modulated wave not to be loaded at the first loading moment, and control the modulated wave to be loaded at a second loading moment, where the second loading moment is a moment at which the carrier wave reaches a zero-crossing point for the first time after the first loading moment.

In a feasible implementation, the power conversion circuit is connected in parallel between a positive direct current bus and a negative direct current bus, the upper half bridge arm and the lower half bridge arm each include two switching transistors connected in series, the power conversion circuit further includes two clamp switching transistors, and the two clamp switching transistors are connected in series and then in parallel between a series connection point between the two switching transistors of the upper half bridge arm and a series connection point between the two switching transistors of the lower half bridge arm.

When the carrier wave is in the peak point region, a voltage between a series connection point between the upper half bridge arm and the lower half bridge arm and a series connection point between the two clamp switching transistors is half of a voltage between the positive direct current bus and the negative direct current bus or zero.

In a feasible implementation, the power conversion circuit is connected in parallel between a positive direct current bus and a negative direct current bus, the upper half bridge arm and the lower half bridge arm each include two switching transistors connected in series, the power conversion circuit further includes two clamp diodes, and the two clamp diodes are connected in series and then in parallel between a series connection point between the two switching transistors of the upper half bridge arm and a series connection point between the two switching transistors of the lower half bridge arm.

When the carrier wave is in the peak point region, a voltage between a series connection point between the upper half bridge arm and the lower half bridge arm and a series connection point between the two clamp diodes is half of a voltage between the positive direct current bus and the negative direct current bus or zero.

In a feasible implementation, in one carrier wave period, the modulated wave includes N loading moments, where N is 1 or an even number greater than or equal to 2.

In this way, when the carrier wave is in the peak point region, the controller in the power converter controls the switching transistors of the upper half bridge arm or the switching transistors of the lower half bridge arm to remain in an on/off switching state in the peak point region, and controls to keep the switching transistors of the other half bridge arm not performing an action. This can avoid a large level jump of the output level of the power converter caused by the switching transistors of both the upper half bridge arm and lower half bridge arm performing an action in the peak point region (for example, a direct jump from a positive level to a negative level or a direct jump from a negative level to a positive level in an output level of a three-level converter), so that smooth switching can be performed in the output level of the power converter in a zero-crossing switching process of the modulated wave, thereby reducing stress of the switching transistor in the power converter and improving circuit reliability.

According to a third aspect, this application provides a control method for a power converter. The method includes:
generating a carrier wave and a modulated wave, and generating, based on the carrier wave and the modulated wave, a control signal for controlling turning on or turning off of a switching transistor in the power converter; and
in response to the modulated wave being to undergo polarity switching at a predetermined first loading moment and an amplitude of the carrier wave being zero or a peak at the first loading moment, controlling the modulated wave not to be loaded at the first loading moment, and controlling the modulated wave to be delayed to a second loading moment for loading, where an amplitude of the carrier wave at the second loading moment is different from the amplitude of the carrier wave at the first loading moment, and the amplitude of the carrier wave at the second loading moment is a peak or zero, where
the carrier wave is a triangular wave, the modulated wave is a sine wave, the sine wave includes a plurality of square waves, amplitudes of two adjacent square waves in the plurality of square waves are different, and a switching moment between the two adjacent square waves is a loading moment.

In a feasible implementation, the method includes: outputting a high-level control signal in response to an amplitude of the modulated wave being greater than an amplitude of the carrier wave; and
in response to the amplitude of the carrier wave at the first loading moment being zero, controlling the modulated wave not to be loaded at the first loading moment, and controlling the modulated wave to be loaded at the second loading moment, where the second loading moment is a moment at which the carrier wave reaches a peak point for the first time after the first loading moment.

In a feasible implementation, the method includes: outputting a high-level control signal in response to an amplitude of the modulated wave being less than an amplitude of the carrier wave; and
in response to the amplitude of the carrier wave at the first loading moment being a peak, controlling the modulated wave not to be loaded at the first loading moment, and controlling the modulated wave to be loaded at the second loading moment, where the second loading moment is a moment at which the carrier wave reaches a zero-crossing point for the first time after the first loading moment.

In this way, when the modulated wave is to undergo zero-crossing switching at the predetermined first loading moment and the amplitude of the carrier wave at the first loading moment is zero or a peak, if the modulated wave is still loaded at the first loading moment, a large jump may occur in an output level of the power converter. Therefore, the modulated wave may be controlled not to be loaded at the first loading moment, and the modulated wave is controlled to be delayed to the second loading moment for loading. Because an amplitude of the carrier wave at the second loading moment is different from an amplitude of the carrier wave at the first loading moment, and the amplitude of the carrier wave at the second loading moment is a peak or zero, the carrier wave may be prevented from being at a specific point that causes a large jump of the output level of the power converter during zero-crossing switching of the modulated wave, so that the output level of the power converter can undergo smooth switching in a zero-crossing switching process of the modulated wave, thereby reducing stress of the switching transistor in the power converter, and improving circuit reliability.

### BRIEF DESCRIPTION OF DRAWINGS

FIG. 1 is a diagram of an application scenario of a power converter according to this application;
FIG. 2 is a diagram of a pulse sequence output by a three-level converter;
FIG. 3 is a schematic of a topology of a three-level ANPC converter;
FIG. 4 is a diagram of an SPWM modulation principle of a three-level ANPC converter;
FIG. 5 is a diagram of a natural zero-crossing point moment of a modulated wave and a loading moment of a discrete modulated wave in an ideal case;
FIG. 6 is a diagram of a case in which a natural zero-crossing point of a modulated wave does not correspond to a specific point of a carrier wave in an actual case;
FIG. 7 is a diagram of another case in which a natural zero-crossing point of a modulated wave does not correspond to a specific point of a carrier wave in an actual case;
FIG. 8 is a diagram of a process for a three-level ANPC converter during zero-crossing switching of a modulated wave according to this application;
FIG. 9 is a diagram of another process for a three-level ANPC converter during zero-crossing switching of a modulated wave according to this application;
FIG. 10 is a schematic of a topology of a three-level NPC converter;
FIG. 11 is a diagram of a process for a three-level NPC converter during zero-crossing switching of a modulated wave according to this application;
FIG. 12 is a diagram of another process for a three-level NPC converter during zero-crossing switching of a modulated wave according to this application;
FIG. 13 is a diagram of still another process for a three-level ANPC converter during zero-crossing switching of a modulated wave according to this application;
FIG. 14a is a schematic of a commutation path for a three-level ANPC converter in a zero-crossing switching process of a modulated wave;
FIG. 14b is a schematic of another commutation path of a three-level ANPC converter in a zero-crossing switching process of a modulated wave;
FIG. 15a is a schematic of a commutation path of a three-level NPC converter in a zero-crossing switching process of a modulated wave;
FIG. 15b is a schematic of another commutation path of a three-level NPC converter in a zero-crossing switching process of a modulated wave;
FIG. 16 is a diagram of still another process for a three-level ANPC converter during zero-crossing switching of a modulated wave according to this application;
FIG. 17 is a diagram of still another process for a three-level ANPC converter during zero-crossing switching of a modulated wave according to this application;
FIG. 18 is a diagram of still another process for a three-level NPC converter during zero-crossing switching of a modulated wave according to this application;
FIG. 19 is a diagram of still another process for a three-level NPC converter during zero-crossing switching of a modulated wave according to this application;
FIG. 20 is a diagram of still another process for a three-level ANPC converter during zero-crossing switching of a modulated wave according to this application;
FIG. 21 is a schematic flowchart of a control method for a power converter according to this application; and
FIG. 22A and FIG. 22B are another schematic flowchart of a control method for a power converter according to this application.

### DESCRIPTION OF EMBODIMENTS

A power converter provided in this application is applicable to a plurality of types of power conversion devices such as an inverter or a converter, and may be used in a photovoltaic power generation field, an energy storage field, and the like. The power converter provided in this application may be a multi-level converter like a three-level neutral point clamped (Neutral Point Clamped, NPC) converter, a three-level active neutral point clamped (Active neutral point clamped, ANPC) converter, a three-level T type converter, a three-level flying capacitor converter, a five-level ANPC converter, a five-level NPC converter, a five-level flying capacitor converter, or another hybrid multi-level converter (for example, a seven-level converter). A topology of the power converter is not specifically limited in this application. For ease of description, in this application, a three-level converter is used as an example to describe the power converter provided in this application.

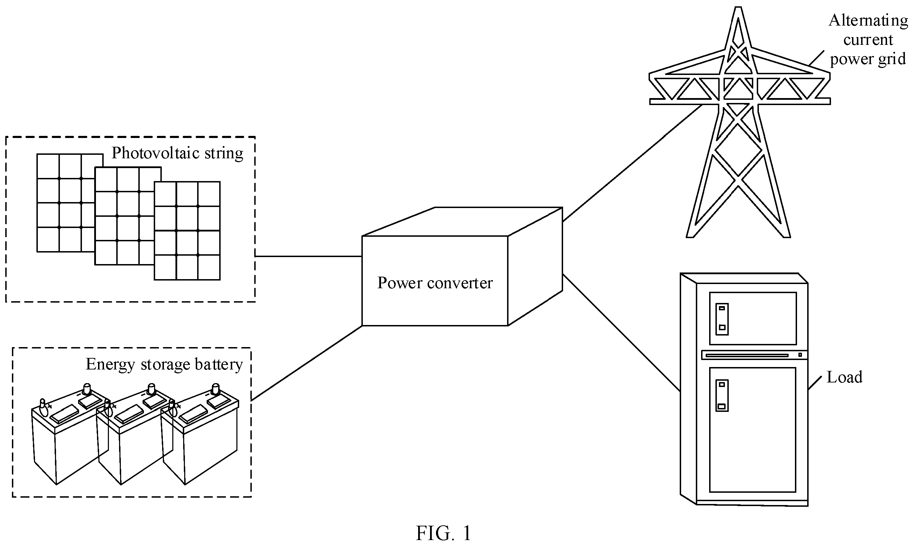

FIG. 1 is a diagram of an application scenario of a power converter. In the application scenario shown in FIG. 1, the power converter may be a direct current DC/alternating current AC converter, an alternating current AC/direct current DC converter, or a bidirectional DC/AC converter. For ease of description, in FIG. 1, an example in which the power converter is a three-level inverter is used for description. As shown in FIG. 1, a direct current connection end of the power converter may be connected to a direct current power supply. Herein, the direct current power supply may be a photovoltaic module, an energy storage battery, or the like. An alternating current output end of the power converter may be connected to an alternating current power grid and/or a load. Herein, the load may be various power loads, another power converter, or the like. This is not limited in this application. As shown in FIG. 1, the power converter may be configured to invert a direct current provided by the direct current power supply to an alternating current, and output the alternating current to the alternating current power grid or supply power to the load.

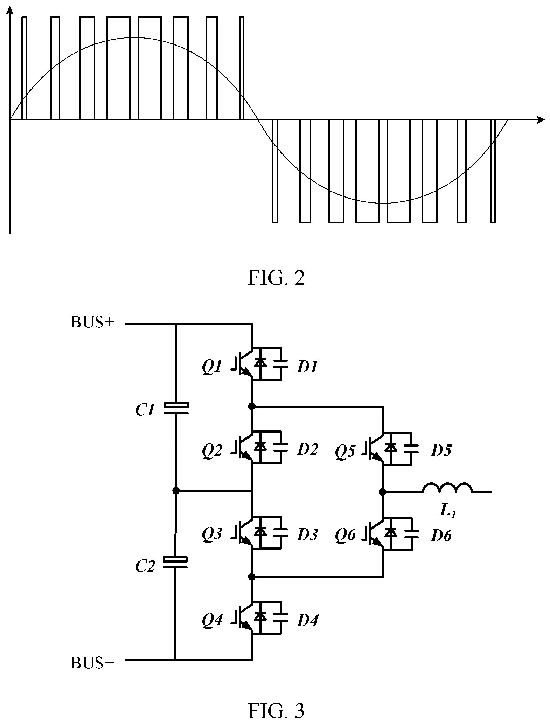

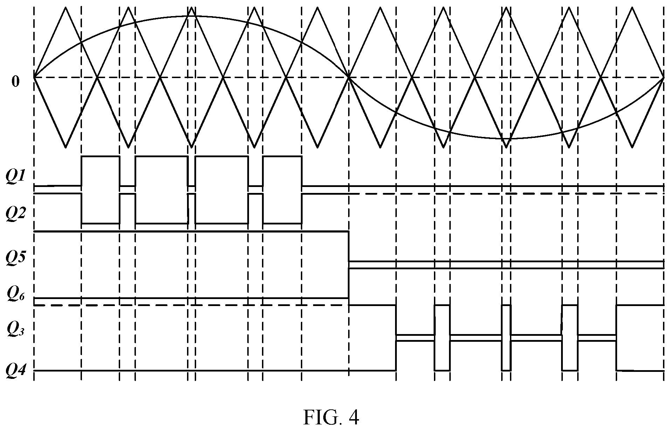

In the foregoing application scenario, the power converter may perform modulation by using a carrier wave-based pulse width modulation PWM scheme. Herein, the carrier wave-based PWM is to obtain an output PWM signal by directly comparing a signal wave (also referred to as a modulated wave) with a carrier wave. When the output PWM signal is a pulse sequence that approximates a sine wave, the modulation scheme may be referred to as sinusoidal pulse width modulation SPWM. FIG. 2 shows a pulse sequence output by a three-level converter. As shown in FIG. 2, the three-level converter uses SPWM, and a pulse width in the output pulse sequence varies according to a sinusoidal law. FIG. 3 is a diagram of a topology of a three-level ANPC converter. As shown in FIG. 3, a switching transistor Q1, a switching transistor Q5, a switching transistor Q6, and a switching transistor Q4 are sequentially connected in series, a switching transistor Q2 and a switching transistor Q3 are connected in series and then connected in parallel to the switching transistor Q5 and the switching transistor Q6 that are connected in series, and a series connection point between the switching transistor Q2 and the switching transistor Q3 is connected to a series connection point between a capacitor C1 and a capacitor C2, a connection point between the switching transistor Q5 and the switching transistor Q6 is connected to an inductor L1, a first end of the switching transistor Q1 and a first end of the capacitor C1 are connected to a positive direct current bus BUS+, and a second end of the switching transistor Q4 and a second end of the capacitor C2 are connected to a negative direct current bus BUS-. The switching transistor Q1 to the switching transistor Q6 may be insulated gate bipolar transistors (Insulated Gate Bipolar Transistor, IGBT). In this case, a first end of the switching transistor is a collector, and a second end of the switching transistor is an emitter. Each switching transistor has a corresponding freewheeling diode, represented as D1 to D6 in FIG. 3. An output level of the three-level converter may include three level states: a positive level (Udc/2), a zero level (0), and a negative level (-Udc/2), where Udc is a voltage between a positive direct current bus and a negative direct current bus. FIG. 4 is a diagram of an SPWM modulation principle of a three-level ANPC converter. As shown in FIG. 4, a carrier wave is a triangular wave, two groups of triangular waves are distributed in phase opposition disposition and perpendicular to a horizontal coordinate axis, a modulated wave is a sine wave, and switching transistors Q1 to Q6 in the three-level converter may be controlled to be turned on or turned off based on a comparison result between the carrier wave and the modulated wave, to obtain a required pulse sequence. A control signal waveform of each switching transistor shown in FIG. 4 is an ideal waveform without accounting for a dead time and a narrow pulse width. In an SPWM modulation process, the switching transistor Q1 and the switching transistor Q2 are alternately modulated with the switching transistor Q3 and the switching transistor Q4 every half sinusoidal period. The switching transistor Q1 and the switching transistor Q2 are complementary to each other in turn-on/turn-off states, and the switching transistor Q4 and the switching transistor Q3 are complementary to each other in turn-on/turn-off states. The switching transistor Q5 and the switching transistor Q6 are respectively always on and off when a sine wave is in a positive half period, and are always off and on when the sine wave is in a negative half period.

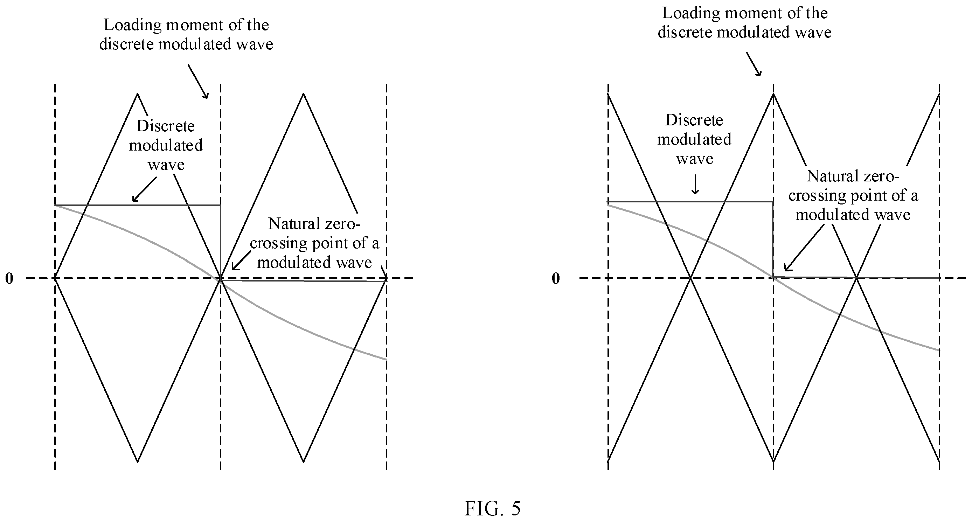

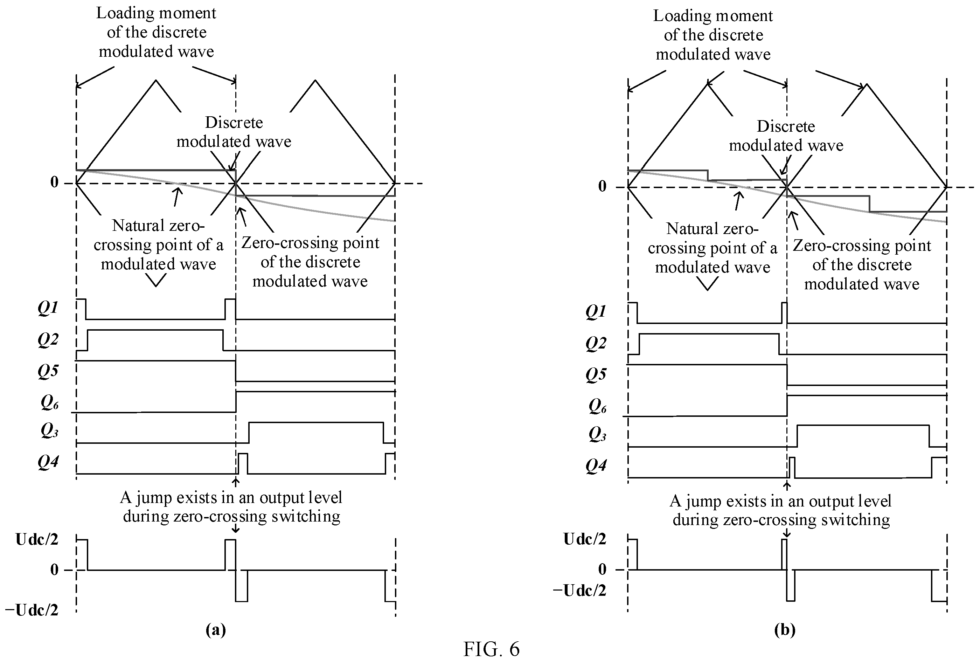

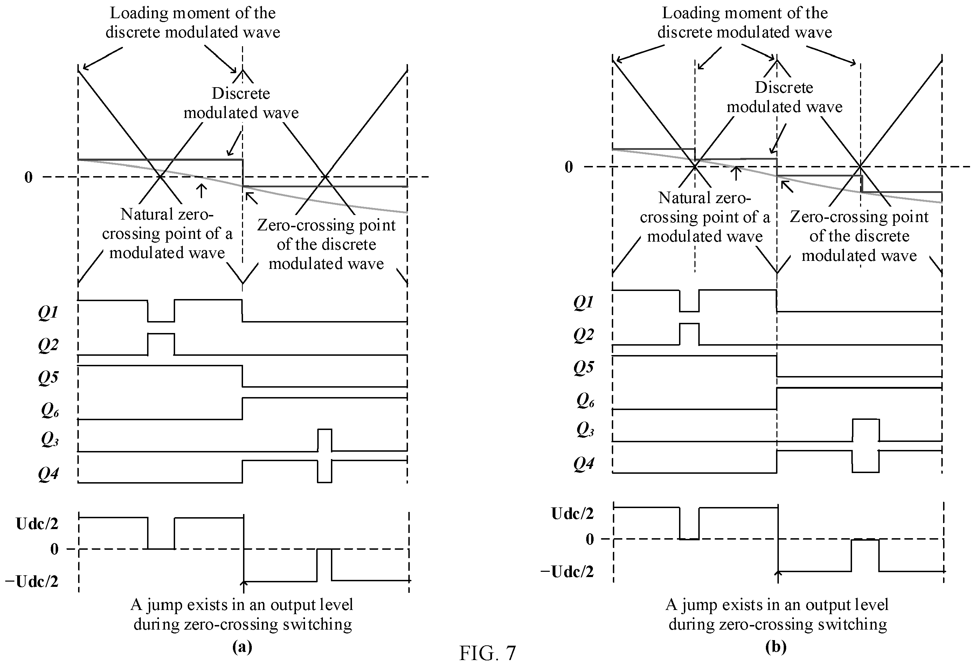

In a PWM modulation scheme shown in FIG. 4, an occasion at which each switching transistor is controlled to be turned on or turned off is determined based on a natural cross point between the carrier wave and the modulated wave. In actual application, different from a modulated wave with continuous amplitudes in FIG. 4 (sine wave in FIG. 4), a modulated wave obtained by using a digital controller may be a plurality of discrete square waves. Herein, the square wave is a waveform whose amplitude remains unchanged, and amplitudes of two adjacent square waves are different (which may be represented as a plurality of discrete square waves in SPWM and the plurality of square waves vary in a sinusoidal trend). The modulated wave may be referred to as a discrete modulated wave. Therefore, a cross point between the discrete modulated wave and the carrier wave may be used to replace the natural cross point between the carrier wave and the modulated wave, to determine the occasion at which each switching transistor is controlled to be turned on or turned off. In this manner, the PWM modulation scheme is implemented by using a regular sampling method. A switching moment between two adjacent square waves is a loading moment of the modulated wave. To avoid confusion, in this application, when a natural cross point or a natural zero-crossing point of a modulated wave is mentioned, the modulated wave may be understood as a sine wave with continuous amplitudes. When a discrete modulated wave or a loaded modulated wave is mentioned, the modulated wave may be understood as a sine wave, and the sine wave includes a plurality of discrete square waves. The loading moment of the modulated wave may be a predetermined fixed moment. For example, when the modulated wave is loaded at a double frequency, the loading moment of the modulated wave may include a moment at which a carrier wave passes through a zero-crossing point and a peak point. FIG. 5 is a diagram of a natural zero-crossing point moment of a modulated wave and a loading moment of a discrete modulated wave in an ideal case. As shown in FIG. 5, the modulated wave may always pass through a natural zero-crossing point when a carrier wave is at a specific point (for example, a zero-crossing point or a peak point), and the loading moment of the discrete modulated wave may be a moment corresponding to the specific point. In this case, a zero-crossing switching moment of the discrete modulated wave coincides with a moment at which the modulated wave passes through the natural zero-crossing point, and the carrier wave is always at the specific point when the discrete modulated wave undergoes zero-crossing switching. However, in actual application, a change of a power grid voltage frequency or a change of a switching frequency may cause a corresponding deviation between a modulated wave and a carrier wave. The modulated wave does not always pass through a natural zero-crossing point when the carrier wave is at a specific point, that is, the natural zero-crossing point of the modulated wave does not always correspond to a specific point of the carrier wave. Even if a loading moment of a discrete modulated wave is a moment corresponding to the specific point, a zero-crossing switching moment of the discrete modulated wave does not coincide with a moment at which the modulated wave passes through the natural zero-crossing point, a location of the carrier wave during zero-crossing switching of the discrete modulated wave is not fixed. For example, the carrier wave may be at a zero-crossing point, a peak point, or another point during zero-crossing switching of the discrete modulated wave. In this case, after the discrete modulated wave is loaded, a large jump may occur in an output level of a multi-level converter. For example, an output level of a three-level converter directly changes from a positive level to a negative level without passing through a zero level. FIG. 6 and FIG. 7 show two different cases in which a natural zero-crossing point of a modulated wave does not correspond to a specific point of a carrier wave. (a) and (b) in FIG. 6 show that when a loading manner of the modulated wave is single-frequency loading and double-frequency loading, a natural zero-crossing point of the modulated wave does not correspond to a zero-crossing point of a carrier wave, and the carrier wave is at the zero-crossing point during zero-crossing switching of the (discrete) modulated wave. (a) and (b) in FIG. 7 show that when a loading manner of the modulated wave is single-frequency loading and double-frequency loading, a natural zero-crossing point of the modulated wave does not correspond to a peak point of a carrier wave, and the carrier wave is at the peak point during zero-crossing switching of the (discrete) modulated wave. In these cases, after the discrete modulated wave is loaded, a large jump may occur in an output level of a multi-level converter, and voltage stress of a switching device in the converter is high, causing high probability of damage.

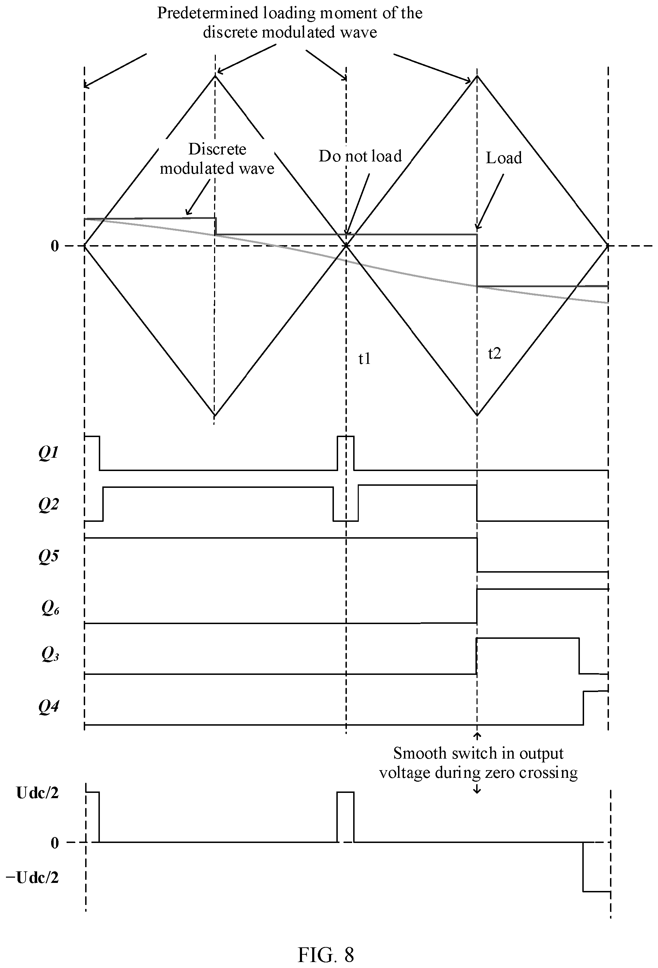

The following describes, with reference to FIG. 8 to FIG. 20, a power converter provided in this application as an example.

A power converter provided in this application may include a power conversion circuit, an output inductor, and a controller. The power conversion circuit includes a power bridge arm, the power bridge arm includes an upper half bridge arm and a lower half bridge arm, each half bridge arm includes at least two switching transistors, and an output end of the power bridge arm is connected to the output inductor. The power converter may be used in the application scenario shown in FIG. 1 or another application scenario. This is not limited in this application.

Optionally, the controller of the power converter may include a sampling unit, a digital controller, a modulation control unit, and the like. The sampling unit may be configured to collect status information such as a voltage and a current of the power converter, and feed back the status information to the digital controller. The digital controller may be configured to control the power converter according to a specified control target and control strategy based on the status information of the power converter fed back by the collection unit. The modulation control unit may be configured to perform pulse width modulation on the power converter based on an output of the digital controller, and output a control signal to control the switching transistor to be turned on or turned off, so that the power converter works normally.

In a feasible implementation, the controller of the power converter may be configured to generate a carrier wave and a modulated wave, and control, based on the modulated wave and the carrier wave, turning on or turning off of the switching transistors of the upper and lower bridge arms. The controller may be further configured to: when the carrier wave is in a zero-crossing point region, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in a zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the zero-crossing point region, where the zero-crossing point region includes an interval in which an amplitude of the carrier wave is less than or equal to a cross value, and the cross value is an amplitude of a cross point that is between the carrier wave and the modulated wave and that is closest to a zero-crossing point of the carrier wave. Herein, the amplitude of the carrier wave/modulated wave may represent a longitudinal distance between any point of the carrier wave/modulated wave and an origin of a coordinate axis. It may be understood that, when the carrier wave is in the zero-crossing point region, the carrier wave is near the zero-crossing point, the switching transistors of the upper half bridge arm or the switching transistors of the lower half bridge arm in the switching transistors of the upper and lower half bridge arms perform an action in this period, and the switching transistors of the other half bridge arm do not perform an action. In this way, this can avoid a large level jump of an output level of the power converter caused by the switching transistors of both the upper half bridge arm and lower half bridge arm performing an action in the zero-crossing point region (for example, a direct jump from a positive level to a negative level or a direct jump from a negative level to a positive level in an output level of a three-level converter), thereby reducing stress of the switching transistor in the power converter.

In a feasible implementation, the controller is further configured to: when the carrier wave is in a zero-crossing point region and the modulated wave is about to undergo zero-crossing switching, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in the zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the zero-crossing point region, where the zero-crossing point region includes the interval in which the amplitude of the carrier wave is less than or equal to the cross value, the cross value is the amplitude of the cross point that is between the carrier wave and the modulated wave and that is closest to the zero-crossing point of the carrier wave, and an amplitude of the modulated wave is less than a specified threshold when the modulated wave is about to undergo zero-crossing switching. Herein, the specified threshold may be determined based on an actual situation. The specified threshold is less than a largest value in absolute values of differences between amplitudes of two adjacent square waves in a plurality of square waves, or the specified threshold is less than or equal to an amplitude of a square wave whose amplitude is the smallest in a plurality of square waves. When the amplitude of the modulated wave is less than the specified threshold, the modulated wave is about to enter a negative half period from a positive half period or enter a positive half period from a negative half period, that is, is about to undergo zero-crossing switching.

For example, the power converter is a three-level ANPC converter. A structure of the power converter is shown in FIG. 3. The power conversion circuit is connected in parallel between the positive direct current bus and the negative direct current bus, the upper half bridge arm includes the switching transistor Q1 and the switching transistor Q5 that are connected in series, and the lower half bridge arm includes the switching transistor Q4 and the switching transistor Q6 that are connected in series. The switching transistor Q1 of the upper half bridge arm is connected to the positive direct current bus, and the switching transistor Q4 of the lower half bridge arm is connected to the negative direct current bus. The power conversion circuit further includes two clamp switching transistors, that is, the switching transistor Q2 and the switching transistor Q3. The two switching transistors are connected in series, and then are connected in parallel between a series connection point between the two switching transistors of the upper half bridge arm and a series connection point between the two switching transistors of the lower half bridge arm. In the power bridge arm, the switching transistor Q1 and the switching transistor Q4 are located externally, and the switching transistor Q5 and the switching transistor Q6 are located internally. Therefore, the switching transistor Q1 and the switching transistor Q4 may be referred to as external transistors, and the switching transistor Q5 and the switching transistor Q6 may be referred to as internal transistors. The output inductor may be the inductor L1 in FIG. 3.

When the modulated wave is a sine wave, and the modulated wave is about to undergo zero-crossing switching (for example, the modulated wave enters a negative half period from a positive half period, as shown in FIG. 8), at a moment at which the carrier wave enters the zero-crossing point region, the external transistor Q1 of the upper half bridge arm is switched from a turn-off state to a turn-on state, and the external transistor Q4 of the lower half bridge arm keeps not performing an action and is still in a turn-off state. When the carrier wave is in the zero-crossing point region, the external transistor Q1 of the upper half bridge arm remains in a turn-on state, and the external transistor Q4 of the lower half bridge arm keeps not performing an action and is still in a turn-off state. In the zero-crossing point region, the internal transistor Q5 of the upper half bridge arm remains in a turned-on state, the internal transistor Q6 of the lower half bridge arm remains in a turned-off state, the switching transistor Q2 and the switching transistor Q1 are complementary to each other in turn-on/turn-off states, and the switching transistor Q3 and the switching transistor Q4 keep not performing an action and are still in a turn-off state. It may be understood that, at a moment at which the carrier wave enters the zero-crossing point region, the output level of the power converter changes from a zero level to a positive level, and remains in the positive level in the zero-crossing point region (excluding an endpoint). In this case, when the carrier wave is in the zero-crossing point region, a direct jump from the positive level to a negative level does not occur in the output level, thereby greatly reducing stress of the switching transistor, prolonging a service life of the switching transistor, and improving safety and reliability of the power converter. In this case, a problem of a large jump in the output level of the power converter shown in (b) in FIG. 6 is resolved.

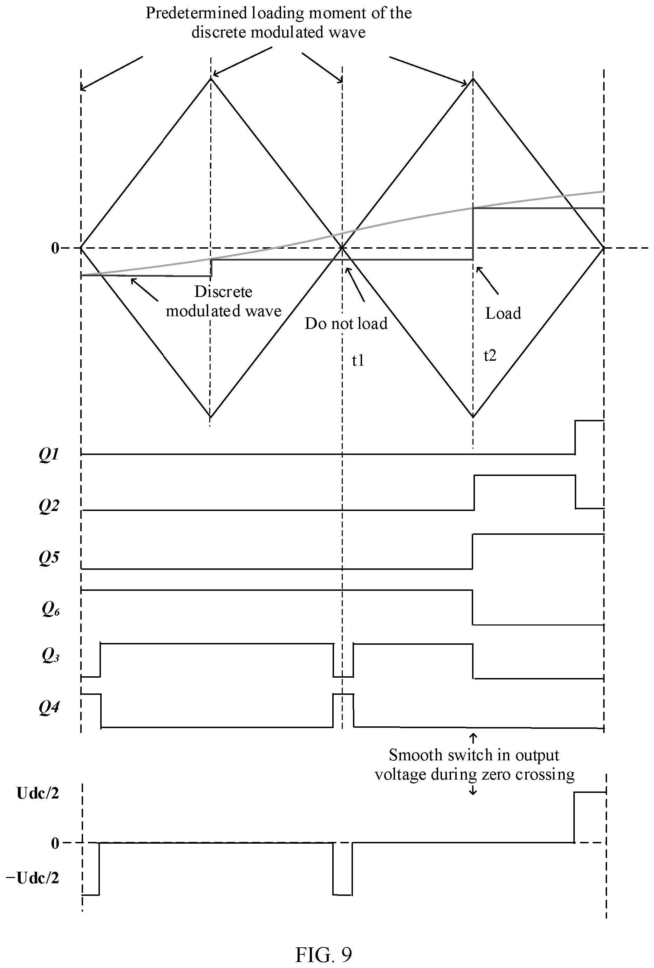

When the modulated wave is a sine wave, and the modulated wave is about to undergo zero-crossing switching (for example, the modulated wave enters a positive half period from a negative half period, as shown in FIG. 9), at a moment at which the carrier wave enters the zero-crossing point region, the external transistor Q4 of the lower half bridge arm is switched from a turn-off state to a turn-on state, and the external transistor Q1 of the upper half bridge arm keeps not performing an action and is still in a turn-off state. When the carrier wave is in the zero-crossing point region, the switching transistor Q4 of the lower half bridge arm remains in a turn-on state, and the external transistor Q1 of the upper half bridge arm keeps not performing an action and is still in a turn-off state. In the zero-crossing point region, the internal transistor Q6 of the lower half bridge arm remains in a turned-on state, the internal transistor Q5 of the upper half bridge arm remains in a turned-off state, the switching transistor Q3 and the switching transistor Q4 are complementary to each other in turn-on/turn-off states, and the switching transistor Q2 and the switching transistor Q1 keep not performing an action and are still in a turn-off state. It may be understood that, at a moment at which the carrier wave enters the zero-crossing point region, the output level of the power converter changes from a zero level to a negative level, and remains in the negative level in the zero-crossing point region (excluding an endpoint). In this case, during zero crossing of the carrier wave, a direct jump from the negative level to a positive level does not occur in the output level, thereby greatly reducing stress of the switching transistor, prolonging a service life of the switching transistor, and improving safety and reliability of the power converter.

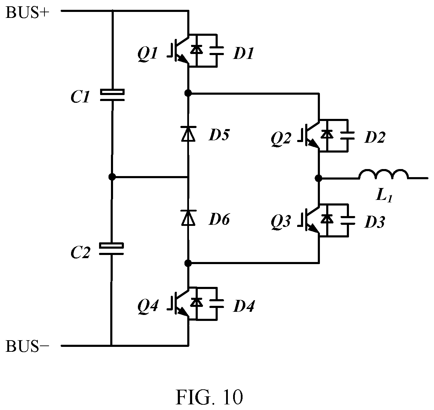

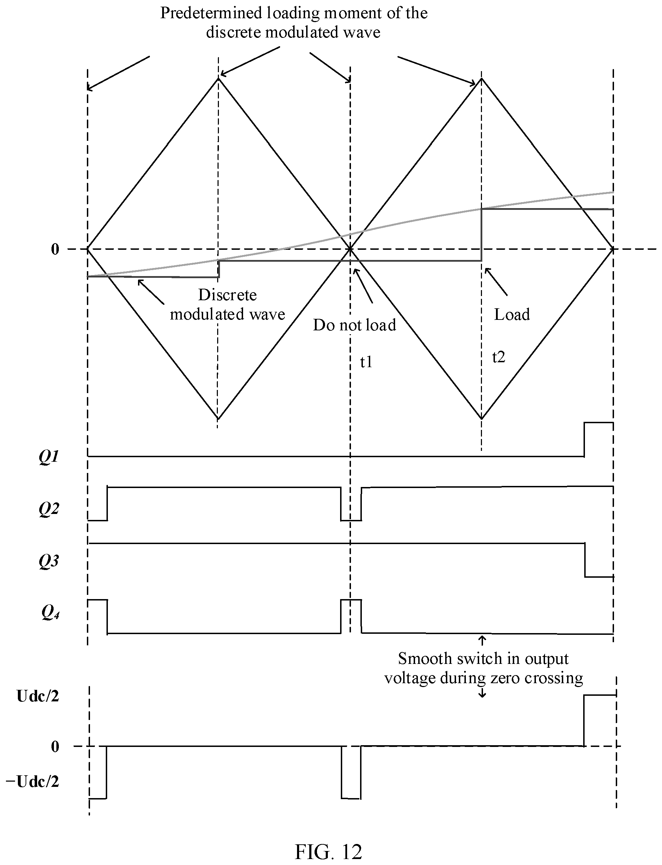

For example, the power converter is a three-level NPC converter. As shown in FIG. 10, an upper half bridge arm of the power conversion circuit includes a switching transistor Q1 and a switching transistor Q2 that are connected in series, a lower half bridge arm includes a switching transistor Q3 and a switching transistor Q4 that are connected in series, the switching transistor Q1 and the switching transistor Q4 are external transistors, and the switching transistor Q2 and the switching transistor Q3 are internal transistors. The power conversion circuit further includes a diode D5 and a diode D6, and the two switching transistors are clamp diodes. The two switching transistors are connected in series, and then are connected in parallel between a series connection point between the two switching transistors of the upper half bridge arm and a series connection point between the two switching transistors of the lower half bridge arm. Specifically, a first end of the switching transistor Q1 is connected to a positive direct current bus, and a second end of the switching transistor Q4 is connected to a negative direct current bus. A connection point between a second end of the switching transistor Q2 and a first end of the switching transistor Q3 is connected to an inductor L1. When the three-level NPC converter performs SPWM modulation, the switching transistor Q1 and the switching transistor Q3 are alternately modulated with the switching transistor Q2 and the switching transistor Q4 every half sinusoidal period. The switching transistor Q1 and the switching transistor Q3 are complementary to each other in turn-on/turn-off states, and the switching transistor Q2 and the switching transistor Q4 are complementary to each other in turn-on/turn-off states. Both a second end of the diode D5 and a first end of a switching transistor Q6 are connected to a series connection point between a capacitor C1 and a capacitor C2. Herein, a first end of a diode is a negative electrode, and a second end is a positive electrode. When the switching transistor is an IGBT, a first end of the switching transistor is a collector, and a second end is an emitter. Each switching transistor has a corresponding freewheeling diode, represented as D1 to D4 in FIG. 12. The output inductor may be the inductor L1 in FIG. 10.

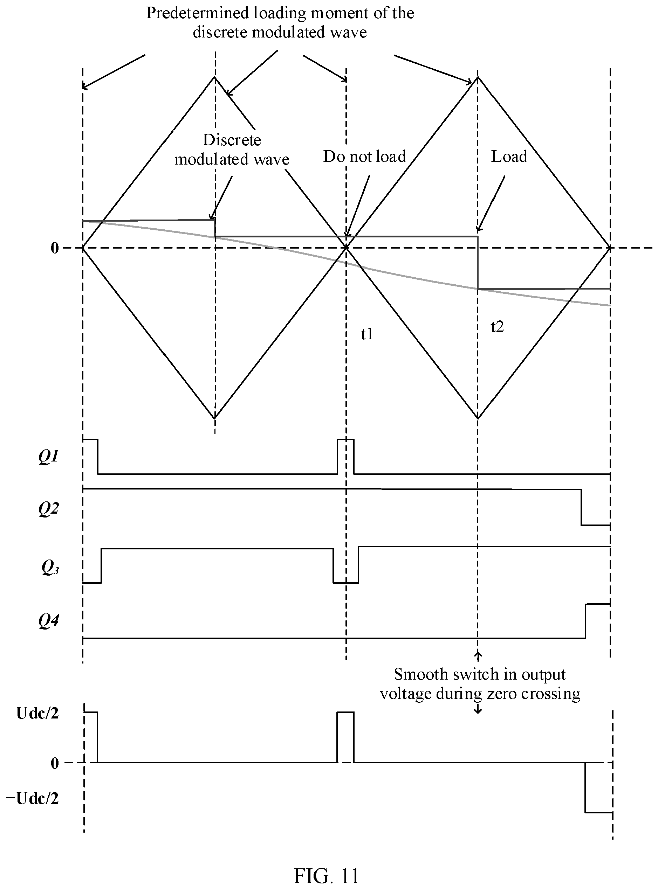

When the modulated wave is a sine wave, and the modulated wave is about to undergo zero-crossing switching (for example, the modulated wave enters a negative half period from a positive half period, as shown in FIG. 11), at a moment at which the carrier wave enters the zero-crossing point region, the external transistor Q1 of the upper half bridge arm is switched from a turn-off state to a turn-on state, and the external transistor Q4 of the lower half bridge arm keeps not performing an action and is still in a turn-off state. When the carrier wave is in the zero-crossing point region, the external transistor Q1 of the upper half bridge arm remains in a turn-on state, and the external transistor Q4 of the lower half bridge arm keeps not performing an action and is still in a turn-off state. In the zero-crossing point region, the internal transistor Q2 and the external transistor Q4 of the upper half bridge arm are complementary to each other in turn-on/turn-off states, and remain in a turn-on state, and the internal transistor Q3 and the external transistor Q1 of the lower half bridge arm are complementary to each other in turn-on/turn-off states. At a moment at which the carrier wave enters the zero-crossing point region, the output level of the power converter changes from a zero level to a positive level, and remains in the positive level in the zero-crossing point region (excluding an endpoint). In this case, during zero crossing of the carrier wave, a direct jump from the positive level to a negative level does not occur in the output level, thereby greatly reducing stress of the switching transistor, prolonging a service life of the switching transistor, and improving safety and reliability of the power converter.

When the modulated wave is a sine wave, and the modulated wave is about to undergo zero-crossing switching (for example, the modulated wave enters a positive half period from a negative half period, as shown in FIG. 12), at a moment at which the carrier wave enters the zero-crossing point region, the external transistor Q4 of the lower half bridge arm is switched from a turn-off state to a turn-on state, and the external transistor Q1 of the upper half bridge arm keeps not performing an action and is still in a turn-off state. When the carrier wave is in the zero-crossing point region, the external transistor Q4 of the lower half bridge arm remains in a turn-on state, and the external transistor Q1 of the upper half bridge arm keeps not performing an action and is still in a turn-off state. In the zero-crossing point region, the internal transistor Q3 and the external transistor Q1 of the lower half bridge arm are complementary to each other in turn-on/turn-off states, and remain in a turn-on state, and the internal transistor Q2 and the external transistor Q4 of the upper half bridge arm are complementary to each other in turn-on/turn-off states. It may be understood that, at a moment at which the carrier wave enters the zero-crossing point region, the output level of the power converter changes from a zero level to a negative level, and remains in the negative level in the zero-crossing point region (excluding an endpoint). In this case, during zero crossing of the carrier wave, a direct jump from the negative level to a positive level does not occur in the output level, thereby greatly reducing stress of the switching transistor, prolonging a service life of the switching transistor, and improving safety and reliability of the power converter.

The foregoing uses examples in which the power converter is the three-level ANPC converter and the three-level NPC converter, to describe the turn-on/turn-off state of the switching transistor in the power conversion circuit when the carrier wave is in the zero-crossing point region and the modulated wave is about to undergo zero-crossing switching. Further, in a case in which the power converter is the foregoing three-level ANPC converter, three-level NPC converter, or the like, when the carrier wave is in a zero-crossing point region and the modulated wave is about to undergo zero-crossing switching (from a positive half period to a negative half period), the output level of the power converter is a positive level or a zero level, and in the power conversion circuit, a voltage between a series connection point between the upper half bridge arm and the lower half bridge arm and a series connection point between the two clamp switching transistors is half of a voltage between the positive direct current bus and the negative direct current bus or zero. When the carrier wave is in the zero-crossing point region and the modulated wave is about to undergo zero-crossing switching (from a negative half period to a positive half period), the output level of the power converter is a negative level or a zero level, and in the power conversion circuit, a voltage between a series connection point between the upper half bridge arm and the lower half bridge arm and a series connection point between the two clamp switching transistors is half of a voltage between the positive direct current bus and the negative direct current bus or zero.

The foregoing process describes a status of the switching transistor in the power converter, and the status of the switching transistor may be obtained based on a comparison result between an amplitude of the modulated wave and an amplitude of the carrier wave. The modulated wave includes a sine wave. Further, the modulated wave includes a plurality of discrete square waves. The carrier wave includes a triangular wave. When the modulated wave is in a positive half period, the carrier wave may be a positive-polarity triangular wave in two groups of triangular waves that are in phase opposition disposition, and the positive-polarity triangular wave is above a horizontal coordinate axis. When the modulated wave is in a negative half period, the carrier wave may be a negative-polarity triangular wave in two groups of triangular waves that are in phase opposition disposition, and the negative-polarity triangular wave is below a horizontal coordinate axis. In this case, when the modulated wave is in the positive half period, the modulated wave is compared with the positive-polarity triangular wave, and the switching transistor is controlled to be turned on or turned off based on a comparison result between amplitudes of the two waves. When the modulated wave is in the negative half period, the modulated wave is compared with the negative-polarity triangular wave, and the switching transistor is controlled to be turned on or turned off based on a comparison result between amplitudes of the two waves.

The controller in the foregoing power converter may be configured to output a high-level control signal in response to an amplitude of the modulated wave being greater than an amplitude of the carrier wave. This case may be referred to as Case (1). Herein, when the controller outputs a high-level control signal, a specific switching transistor in the power converter is turned on. For example, the external transistor Q1 or the external transistor Q4 in the three-level ANPC topology shown in FIG. 3 is turned on. For another example, the external transistor Q1 or the external transistor Q4 in the three-level NPC topology shown in FIG. 3 is turned on. Correspondingly, the controller may output a low-level control signal in response to an amplitude of the modulated wave being less than an amplitude of the carrier wave, and in this case, a specific switching transistor in the power converter is turned off. For example, the external transistor Q1 or the external transistor Q4 in the three-level ANPC topology shown in FIG. 3 is turned off. For another example, the external transistor Q1 or the external transistor Q4 in the three-level NPC topology shown in FIG. 3 is turned off.

In Case (1), if the carrier wave is also at a zero-crossing point when the modulated wave is about to undergo polarity switching, a large jump is likely to occur in the output level of the power converter. Therefore, in response to the modulated wave being to undergo polarity switching at a predetermined first loading moment and an amplitude of the carrier wave being zero at the first loading moment, the controller in the power converter may control the modulated wave not to be loaded at the first loading moment and control the modulated wave to be loaded at a second loading moment. Herein, that the modulated wave undergoes polarity switching means that the modulated wave undergoes zero-crossing switching. In this case, the modulated wave enters a negative half period from a positive half period, or the modulated wave enters a positive half period from a negative half period. A switching moment between two adjacent square waves in a plurality of square waves included in a modulated wave is a loading moment, and the modulated wave corresponds to a plurality of predetermined loading moments. The plurality of predetermined loading moments are determined based on a loading manner of the modulated wave. For example, if the loading manner of the modulated wave is single-frequency loading, the plurality of predetermined loading moments may also include a moment at which a carrier wave is at a zero-crossing point in each carrier wave period. If the loading manner of the modulated wave is double-frequency loading, the plurality of predetermined loading moments may include a moment at which a carrier wave is at a zero-crossing point and a peak point in each carrier wave period. The second loading moment is a moment at which the carrier wave reaches a peak point for the first time after the first loading moment. In this way, in Case (1), the carrier wave is at the peak point during zero-crossing switching of the modulated wave, and smooth switching occurs in the output level of the power converter during zero-crossing switching of the modulated wave, thereby avoiding a large level jump, reducing stress of the switching transistor in the power converter, reducing a possibility of damage to the switching transistor, and improving safety and reliability of the power converter.

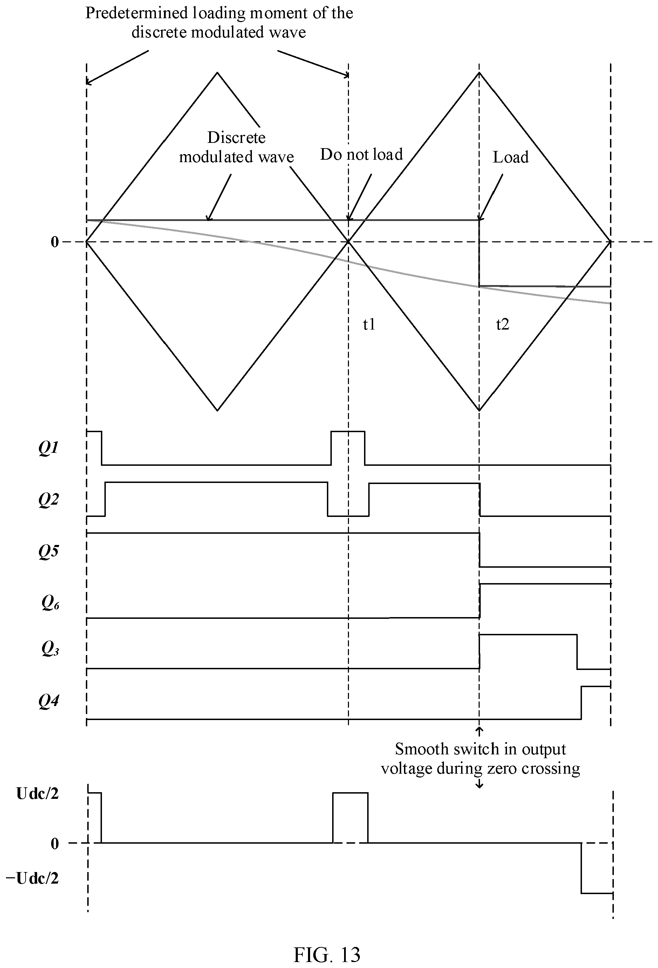

In a feasible implementation, the loading manner of the modulated wave may be N-fold-frequency loading. In this case, in one carrier wave period, the modulated wave includes N loading moments, where N is 1 or an even number greater than or equal to 2. FIG. 8 and FIG. 9 both show a change status of the output level of the three-level ANPC converter, turn-on/turn-off states of the switching transistors, and waveform comparison between the modulated wave and the carrier wave when the loading manner of the modulated wave is double-frequency loading. FIG. 11 and FIG. 12 both show a change status of the output level of the three-level NPC converter, turn-on/turn-off states of the switching transistors, and waveform comparison between the modulated wave and the carrier wave when the loading manner of the modulated wave is double-frequency loading. FIG. 13 shows a change status of the output level of the three-level ANPC converter, turn-on/turn-off states of the switching transistors, and waveform comparison between the modulated wave and the carrier wave when the loading manner of the modulated wave is single-frequency loading. In FIG. 8, FIG. 9, and FIG. 11 to FIG. 13, a moment t1 may be the foregoing first loading moment, and a moment t2 is the foregoing second loading moment. It can be seen from these figures that, when the modulated wave is about to undergo zero-crossing switching (also referred to as polarity switching) at the moment t1 and the carrier wave is at a zero-crossing point at the moment t1, the controller in the power converter controls the modulated wave not to be loaded at the moment t1 and controls the modulated wave to be loaded at the moment t2, so that the carrier wave is at a peak point during actual zero-crossing switching of the modulated wave. In this way, based on a comparison result between the modulated wave and the carrier wave, turn-on/turn-off states of the switching transistors are controlled as described above (as shown in a switching transistor time sequence in a corresponding figure), so that no large level jump occurs in the output level of the power converter when the carrier wave is in the zero-crossing point region, and smooth switching can be implemented in the output level of the power converter during zero-crossing switching of the modulated wave, thereby avoiding excessive stress on the switching transistors.

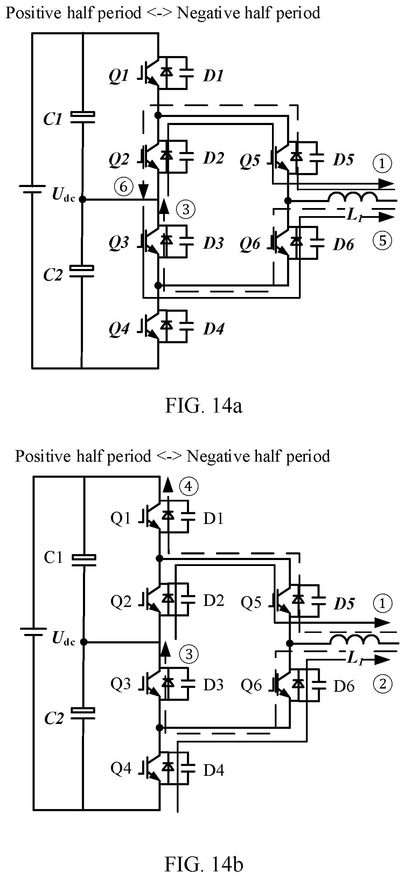

In addition, in some implementations, according to this application, the output level of the three-level ANPC converter remains in a zero level in a zero-crossing switching process of the modulated wave, and when an output current is positive, zero-crossing switching commutation paths are a path ① and a path ⑤ in FIG. 14a; or when the output current is negative, zero-crossing switching commutation paths are a path ③ and a path ⑥ in FIG. 14a, and the commutation path occurs only on internal transistors Q2, Q5, D2, D5, Q3, Q6, D3 and D6. The commutation path is short. Therefore, stress of the switching transistor can also be reduced. If this application is not used, as shown in FIG. 6 and FIG. 7, the output level of the power converter may be directly switched from +Udc/2 to -Udc/2 in a zero-crossing switching process of the modulated wave, leading to a large level jump. In addition, a turn-on dead time for the Q1 and the Q4 is considered, and when an output current is positive, commutation paths in a zero-crossing switching process are a path ① and a path ② in FIG. 14b; or when an output current is negative, zero-crossing switching commutation paths are a path ③ and a path ④ in FIG. 14b. External transistors Q1, D1, Q4, and D4 also participate in the commutation paths. The commutation path is long. Therefore, the switching transistor is likely to generate large voltage stress and current stress.

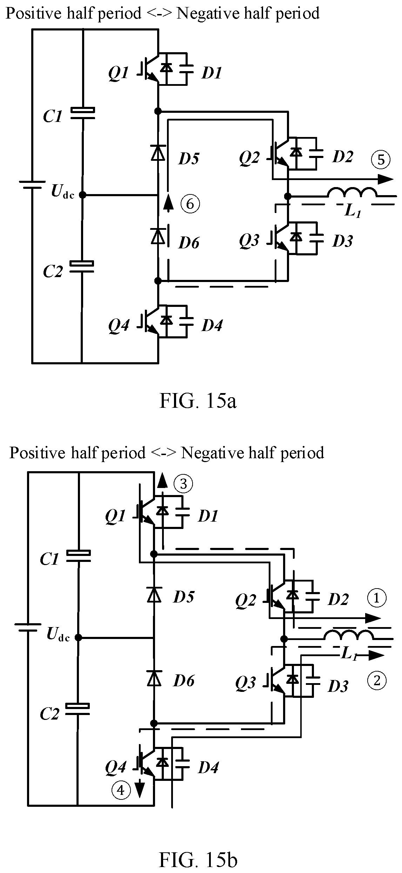

In some implementations, according to this application, the output level of the three-level NPC converter remains in a zero level in a zero-crossing switching process of the modulated wave, and when an output current is positive, a zero-crossing switching commutation path is a path ⑤ in FIG. 15a; or when an output current is negative, a zero-crossing switching commutation path is a path ⑥ in FIG. 15a. The commutation path is short. Therefore, stress of the switching transistor can also be reduced. If this application is not used, in a zero-crossing switching process, an output level of the power converter is switched from +Udc/2 to -Udc/2, and a large level jump exists. In addition, a turn-on dead time for Q1 and Q3 is considered, and when an output current is positive, zero-crossing switching commutation paths are a path ① and a path ② in FIG. 15b; or when an output current is negative, the modulated wave is switched from negative to positive, and zero-crossing switching commutation paths are a path ③ and a path ④ in FIG. 15b. The commutation path is long. Therefore, the switching transistor is likely to generate large voltage stress and current stress.

In embodiments of this application, when the carrier wave is in the zero-crossing point region, the controller in the power converter controls the switching transistors of the upper half bridge arm or the switching transistors of the lower half bridge arm to remain in an on/off switching state in the zero-crossing point region, and controls to keep the switching transistors of the other half bridge arm not performing an action. This can avoid a large level jump of the output level of the power converter caused by the switching transistors of both the upper half bridge arm and lower half bridge arm performing an action in the zero-crossing point region (for example, a direct jump from a positive level to a negative level or a direct jump from a negative level to a positive level in an output level of a three-level converter), so that smooth switching can be performed in the output level of the power converter in a zero-crossing switching process of the modulated wave, thereby reducing stress of the switching transistor in the power converter and improving circuit reliability. In addition, the commutation path is changed in the zero-crossing switching process of the modulated wave, and the commutation path is short. Therefore, the stress of the switching transistor can be further reduced.

Another power converter provided in this application includes a power conversion circuit, an output inductor, and a controller. The power conversion circuit includes a power bridge arm, the power bridge arm includes an upper half bridge arm and a lower half bridge arm, each half bridge arm includes at least two switching transistors, and an output end of the power bridge arm is connected to the output inductor. The power converter may be used in the application scenario shown in FIG. 1 or another application scenario. This is not limited in this application.

In a feasible implementation, the controller of the power converter may be configured to generate a carrier wave and a modulated wave, and control, based on the modulated wave and the carrier wave, turning on or turning off of the switching transistors of the upper and lower bridge arms. The controller is further configured to: when the carrier wave is in a peak point region, control a switching transistor of the upper half bridge arm to keep an on/off switching state unchanged when the carrier wave is in the peak point region, and control to keep the switching transistors of the lower half bridge arm not performing an action, and control a switching transistor of the upper half bridge arm to perform on/off switching at a moment at which the carrier wave enters the peak point region; or when the carrier wave is in a peak point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the peak point region, where the peak point region includes an interval in which an amplitude of the carrier wave is greater than or equal to a cross value, and the cross value is an amplitude of a cross point that is between the carrier wave and the modulated wave and that is closest to a peak point of the carrier wave. Herein, the amplitude of the carrier wave may represent a longitudinal distance between any point of the carrier wave and an origin of a coordinate axis. It may be understood that, when the carrier wave is in the peak point region, the carrier wave is near the peak point, the switching transistors of the upper half bridge arm or the switching transistors of the lower half bridge arm in the switching transistors of the upper and lower half bridge arms perform an action in this period, and the switching transistors of the other half bridge arm do not perform an action. In this way, this can avoid a large jump of an output level of the power converter caused by the switching transistors of both the upper half bridge arm and lower half bridge arm performing an action in the peak point region (for example, a direct jump from a positive level to a negative level or a direct jump from a negative level to a positive level in an output level of a three-level converter), thereby reducing stress of the switching transistor, and improving reliability and safety of the power converter.

In a feasible implementation, the controller is further configured to: when the carrier wave is in a peak point region and the modulated wave is about to undergo zero-crossing switching, control a switching transistor of the upper half bridge arm to keep an on/off switching state unchanged when the carrier wave is in the peak point region, and control to keep the switching transistors of the lower half bridge arm not performing an action, and control a switching transistor of the upper half bridge arm to perform on/off switching at a moment at which the carrier wave enters the peak point region; or when the carrier wave is in the peak point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the peak point region, where the peak point region includes the interval in which the amplitude of the carrier wave is greater than or equal to the cross value, the cross value is the amplitude of the cross point that is between the carrier wave and the modulated wave and that is closest to a zero-crossing point of the carrier wave, and an amplitude of the modulated wave is less than a specified threshold when the modulated wave is about to undergo zero-crossing switching. Herein, the specified threshold may be determined based on an actual situation. The specified threshold is less than a largest value in absolute values of differences between amplitudes of two adjacent square waves in a plurality of square waves, or the specified threshold is less than or equal to an amplitude of a square wave whose amplitude is the smallest in a plurality of square waves. When the amplitude of the modulated wave is less than the specified threshold, the modulated wave is about to enter a negative half period from a positive half period or enter a positive half period from a negative half period, that is, is about to undergo zero-crossing switching.

For example, the power converter is a three-level ANPC converter. The power conversion circuit includes an external transistor Q1, an external transistor Q4, an internal transistor Q5, an internal transistor Q6, and clamp switching transistors Q2 and Q3. For a structure of the three-level ANPC converter, refer to the related descriptions in FIG. 3. Details are not described herein again.

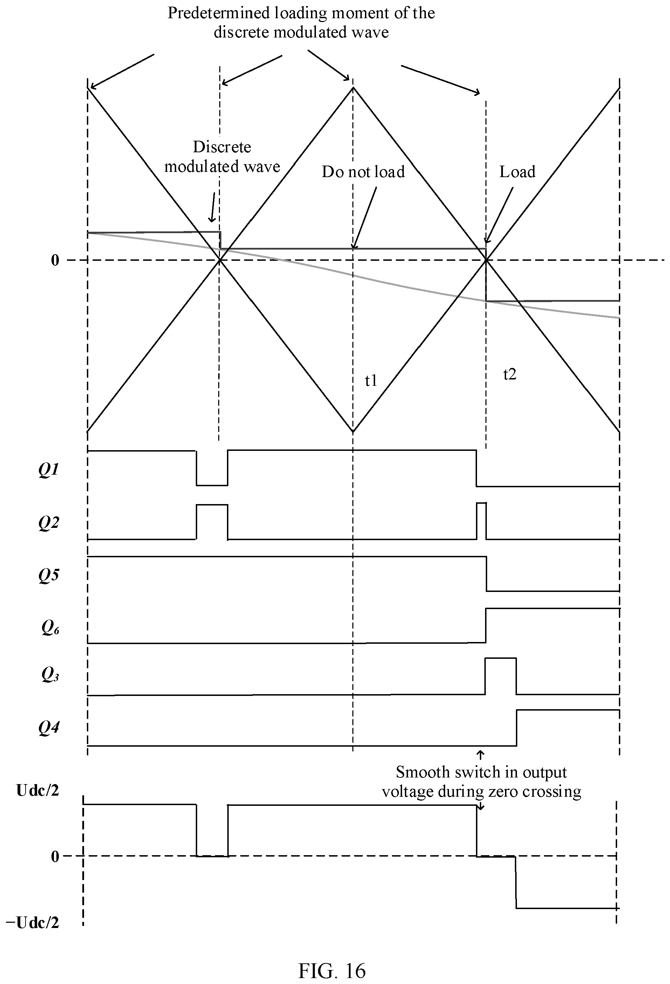

When the modulated wave is a sine wave, and the modulated wave is about to undergo zero-crossing switching (for example, the modulated wave enters a negative half period from a positive half period, as shown in FIG. 16), at a moment at which the carrier wave enters the peak point region, the external transistor Q1 of the upper half bridge arm is switched from a turn-off state to a turn-on state, and the external transistor Q4 of the lower half bridge arm keeps not performing an action and is still in a turn-off state. When the carrier wave is in the peak point region, the external transistor Q1 of the upper half bridge arm remains in a turn-on state, and the external transistor Q4 of the lower half bridge arm keeps not performing an action and is still in a turn-off state. In the peak point region, the internal transistor Q5 of the upper half bridge arm remains in a turned-on state, the internal transistor Q6 of the lower half bridge arm remains in a turned-off state, the switching transistor Q2 and the switching transistor Q1 are complementary to each other in turn-on/turn-off states, and the switching transistor Q3 and the switching transistor Q4 keep not performing an action and are still in a turned-off state. It may be understood that, at a moment at which the carrier wave enters the peak point region, the output level of the power converter changes from a zero level to a positive level, and remains in the positive level in the peak point region (excluding an endpoint). In this case, when the carrier wave is at a peak point, a direct jump from the positive level to a negative level does not occur in the output level of the converter, thereby greatly reducing stress of the switching transistor, prolonging a service life of the switching transistor, and improving safety and reliability of the power converter. In this case, a problem of a large jump in the output level of the power converter shown in (b) in FIG. 7 is resolved.

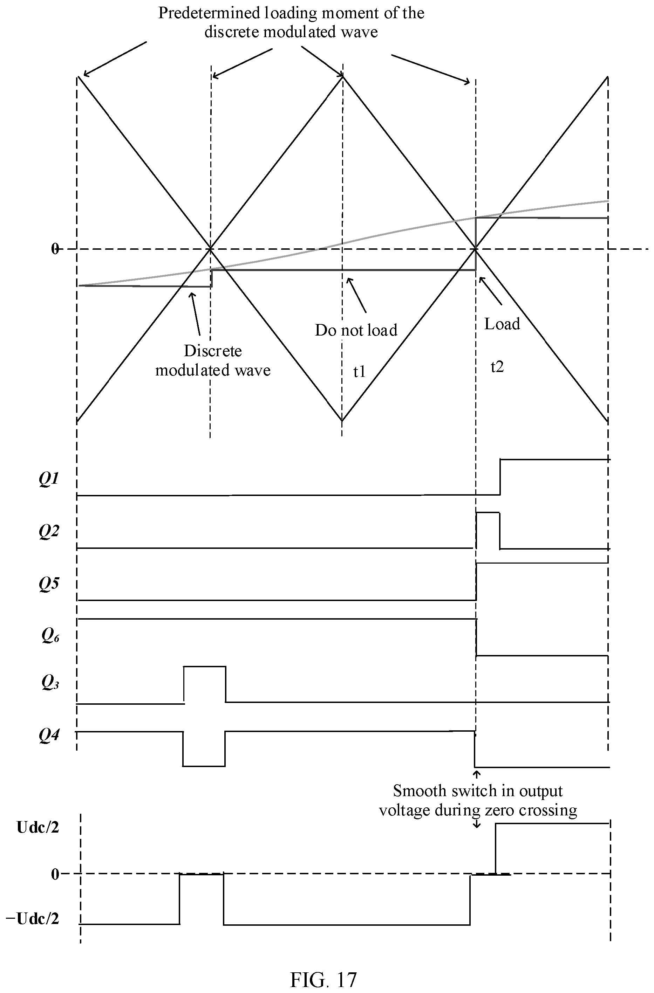

When the modulated wave is a sine wave, and the modulated wave is about to undergo zero-crossing switching (for example, the modulated wave enters a positive half period from a negative half period, as shown in FIG. 17), at a moment at which the carrier wave enters the peak point region, the external transistor Q4 of the lower half bridge arm is switched from a turn-off state to a turn-on state, and the external transistor Q1 of the upper half bridge arm keeps not performing an action and is still in a turn-off state. When the carrier wave is in the peak point region, the switching transistor Q4 of the lower half bridge arm remains in a turn-on state, and the external transistor Q1 of the upper half bridge arm keeps not performing an action and is still in a turn-off state. In the peak point region, the internal transistor Q6 of the lower half bridge arm remains in a turned-on state, the internal transistor Q5 of the upper half bridge arm remains in a turned-off state, the switching transistor Q3 and the switching transistor Q4 are complementary to each other in turn-on/turn-off states, and the switching transistor Q2 and the switching transistor Q1 keep not performing an action and are still in a turn-off state. It may be understood that, at a moment at which the carrier wave enters the peak point region, the output level of the power converter changes from a zero level to a negative level, and remains in the negative level in the peak point region (excluding an endpoint). In this case, when the carrier wave is in the peak point region, a direct jump from the negative level to a positive level does not occur in the output level of the converter, thereby greatly reducing stress of the switching transistor, prolonging a service life of the switching transistor, and improving safety and reliability of the power converter.

For example, the power converter is a three-level NPC converter. The power conversion circuit includes an external transistor Q1, an external transistor Q4, an internal transistor Q2, an internal transistor Q3, and clamp diodes D5 and D6. For a structure of the three-level NPC converter, refer to the related descriptions in FIG. 10. Details are not described herein again.

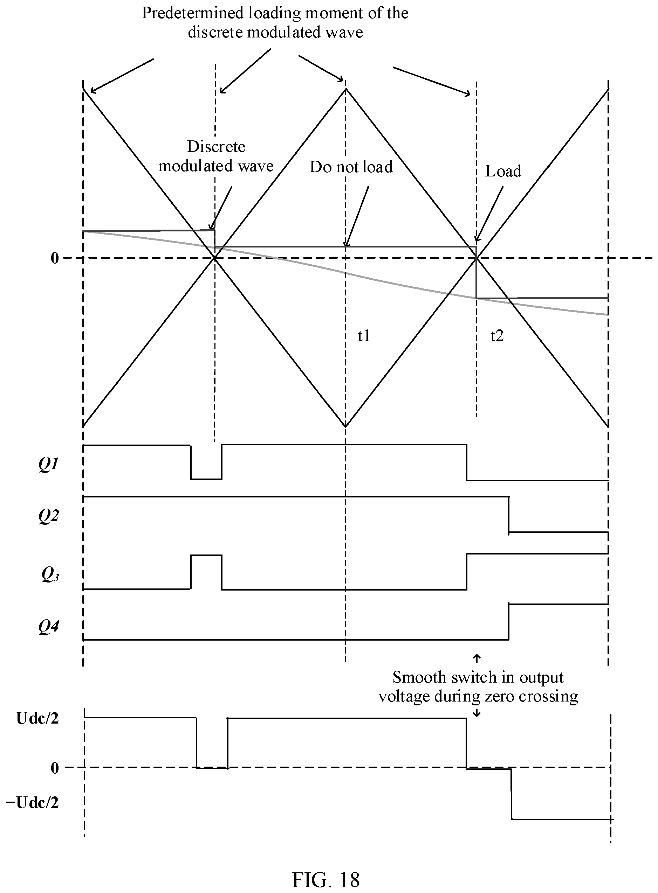

When the modulated wave is a sine wave, and the modulated wave is about to undergo zero-crossing switching (for example, the modulated wave enters a negative half period from a positive half period, as shown in FIG. 18), at a moment at which the carrier wave enters the peak point region, the external transistor Q1 of the upper half bridge arm is switched from a turn-off state to a turn-on state, and the external transistor Q4 of the lower half bridge arm keeps not performing an action and is still in a turn-off state. When the carrier wave is in the peak point region, the external transistor Q1 of the upper half bridge arm remains in a turn-on state, and the external transistor Q4 of the lower half bridge arm keeps not performing an action and is still in a turn-off state. In the peak point region, the internal transistor Q2 and the external transistor Q4 of the upper half bridge arm are complementary to each other in turn-on/turn-off states, and remain in a turn-on state, and the internal transistor Q3 and the external transistor Q1 of the lower half bridge arm are complementary to each other in turn-on/turn-off states. At a moment at which the carrier wave enters the peak point region, the output level of the power converter changes from a zero level to a positive level, and remains in the positive level in the peak point region (excluding an endpoint). In this case, when the carrier wave is at the peak point region, a direct jump from the positive level to a negative level does not occur in the output level of the converter, thereby greatly reducing stress of the switching transistor, prolonging a service life of the switching transistor, and improving safety and reliability of the power converter.

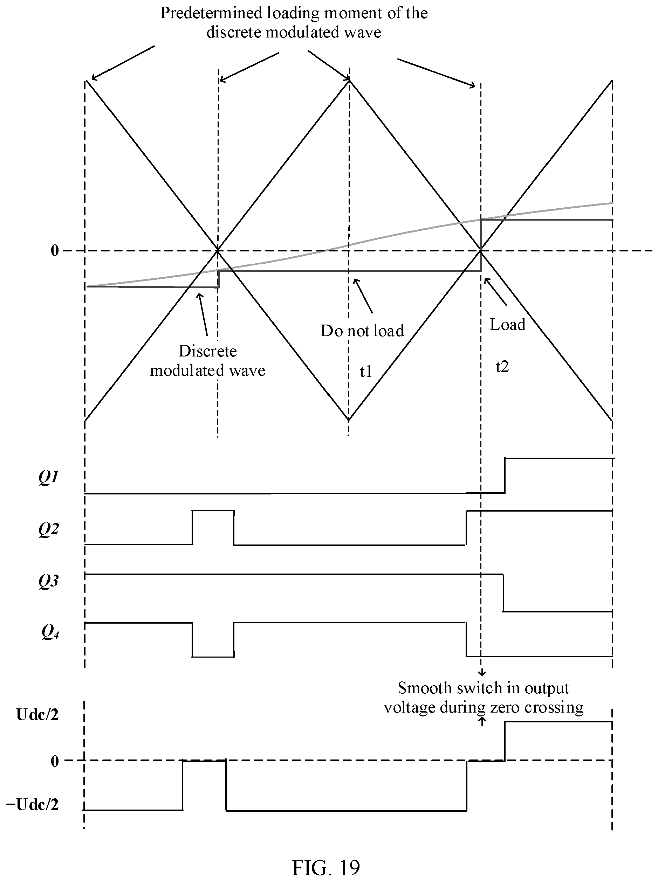

When the modulated wave is a sine wave, and the modulated wave is about to undergo zero-crossing switching (for example, the modulated wave enters a positive half period from a negative half period, as shown in FIG. 19), at a moment at which the carrier wave enters the peak point region, the external transistor Q4 of the lower half bridge arm is switched from a turn-off state to a turn-on state, and the external transistor Q1 of the upper half bridge arm keeps not performing an action and is still in a turn-off state. When the carrier wave is in the peak point region, the external transistor Q4 of the lower half bridge arm remains in a turn-on state, and the external transistor Q1 of the upper half bridge arm keeps not performing an action and is still in a turn-off state. In the peak point region, the internal transistor Q3 and the external transistor Q1 of the lower half bridge arm are complementary to each other in turn-on/turn-off states, and remain in a turn-on state, and the internal transistor Q2 and the external transistor Q4 of the upper half bridge arm are complementary to each other in turn-on/turn-off states. It may be understood that, at a moment at which the carrier wave enters the peak point region, the output level of the power converter changes from a zero level to a negative level, and remains in the negative level in the peak point region (excluding an endpoint). In this case, when the carrier wave is in the peak point region, a direct jump from the negative level to a positive level does not occur in the output level of the converter, thereby greatly reducing stress of the switching transistor, prolonging a service life of the switching transistor, and improving safety and reliability of the power converter.

The foregoing uses examples in which the power converter is the three-level ANPC converter and the three-level NPC converter, to describe the turn-on/turn-off state of the switching transistor in the power conversion circuit when the carrier wave is in the peak point region and the modulated wave is about to undergo zero-crossing switching. Further, in a case in which the power converter is the foregoing three-level ANPC converter, three-level NPC converter, or the like, when the carrier wave is in a peak point region and the modulated wave is about to undergo zero-crossing switching (from a positive half period to a negative half period), the output level of the power converter is a positive level or a zero level, and in the power conversion circuit, a voltage between a series connection point between the upper half bridge arm and the lower half bridge arm and a series connection point between the two clamp switching transistors is half of a voltage between the positive direct current bus and the negative direct current bus or zero. When the carrier wave is in the zero-crossing point region and the modulated wave is about to undergo zero-crossing switching (from a negative half period to a positive half period), the output level of the power converter is a negative level or a zero level, and in the power conversion circuit, a voltage between a series connection point between the upper half bridge arm and the lower half bridge arm and a series connection point between the two clamp switching transistors is half of a voltage between the positive direct current bus and the negative direct current bus or zero. In this way, when the carrier wave is in the peak point region and the modulated wave is about to undergo zero-crossing switching, a direct jump from a negative level to a positive level or from a positive level to a negative level does not occur in the output level of the power converter, thereby greatly reducing stress of the switching transistor, prolonging a service life of the switching transistor, and improving safety and reliability of the power converter.

The foregoing process describes a status of the switching transistor in the power converter, and the status of the switching transistor may be obtained based on a comparison result between an amplitude of the modulated wave and an amplitude of the carrier wave. The modulated wave includes a sine wave. Further, the modulated wave includes a plurality of discrete square waves. The carrier wave includes a triangular wave. When the modulated wave is in a positive half period, the carrier wave may be a positive-polarity triangular wave in two groups of triangular waves that are in phase opposition disposition, and the positive-polarity triangular wave is above a horizontal coordinate axis. When the modulated wave is in a negative half period, the carrier wave may be a negative-polarity triangular wave in two groups of triangular waves that are in phase opposition disposition, and the negative-polarity triangular wave is below a horizontal coordinate axis. In this case, when the modulated wave is in the positive half period, the modulated wave is compared with the positive-polarity triangular wave, and the switching transistor is controlled to be turned on or turned off based on a comparison result between amplitudes of the two waves. When the modulated wave is in the negative half period, the modulated wave is compared with the negative-polarity triangular wave, and the switching transistor is controlled to be turned on or turned off based on a comparison result between amplitudes of the two waves.

Specifically, the controller in the foregoing power converter may be configured to output a high-level control signal in response to an amplitude of the modulated wave being less than an amplitude of the carrier wave. This case may be referred to as Case (2). Herein, when the controller outputs a high-level control signal, a specific switching transistor in the power converter is turned on. For example, the external transistor Q1 or the external transistor Q4 in the three-level ANPC converter shown in FIG. 3 is turned on. For another example, the external transistor Q1 or the external transistor Q4 in the three-level NPC converter shown in FIG. 10 is turned on. Correspondingly, the controller may output a low-level control signal in response to an amplitude of the modulated wave being greater than an amplitude of the carrier wave, and in this case, the specific switching transistor in the power converter is turned off. For example, the external transistor Q1 or the external transistor Q4 in the three-level ANPC converter shown in FIG. 3 is turned off. For another example, the external transistor Q1 or the external transistor Q4 in the three-level NPC converter shown in FIG. 10 is turned off.

In Case (2), if the carrier wave is also at a peak point when the modulated wave is about to undergo polarity switching, a large jump is likely to occur in the output level of the power converter. Therefore, in response to the modulated wave being to undergo polarity switching at a predetermined first loading moment and an amplitude of the carrier wave being a peak at the first loading moment, the controller in the power converter may control the modulated wave not to be loaded at the first loading moment and control the modulated wave to be loaded at a second loading moment. Herein, that the modulated wave undergoes polarity switching means that the modulated wave undergoes zero-crossing switching. In this case, the modulated wave enters a negative half period from a positive half period, or the modulated wave enters a positive half period from a negative half period. A switching moment between two adjacent square waves in a plurality of square waves included in a modulated wave is a loading moment, and the modulated wave corresponds to a plurality of predetermined loading moments. The plurality of predetermined loading moments are determined based on a loading manner of the modulated wave. For example, if the loading manner of the modulated wave is single-frequency loading, the plurality of predetermined loading moments may include a moment at which a carrier wave is at a peak point in each carrier wave period. If the loading manner of the modulated wave is double-frequency loading, the plurality of predetermined loading moments may include a moment at which a carrier wave is at a zero-crossing point and a peak point in each carrier wave period. The second loading moment is a moment at which the carrier wave reaches a zero-crossing point for the first time after the first loading moment. In this way, in Case (1), during zero-crossing switching of the modulated wave, the carrier wave is not at the peak point but is at the zero-crossing point. In this case, no large level jump occurs in the output level of the power converter in the peak point region of the carrier wave, and smooth switching occurs during zero-crossing switching of the modulated wave, thereby reducing stress of the switching transistor in the power converter, reducing a possibility of damage to the switching transistor, and improving safety and reliability of the power converter.

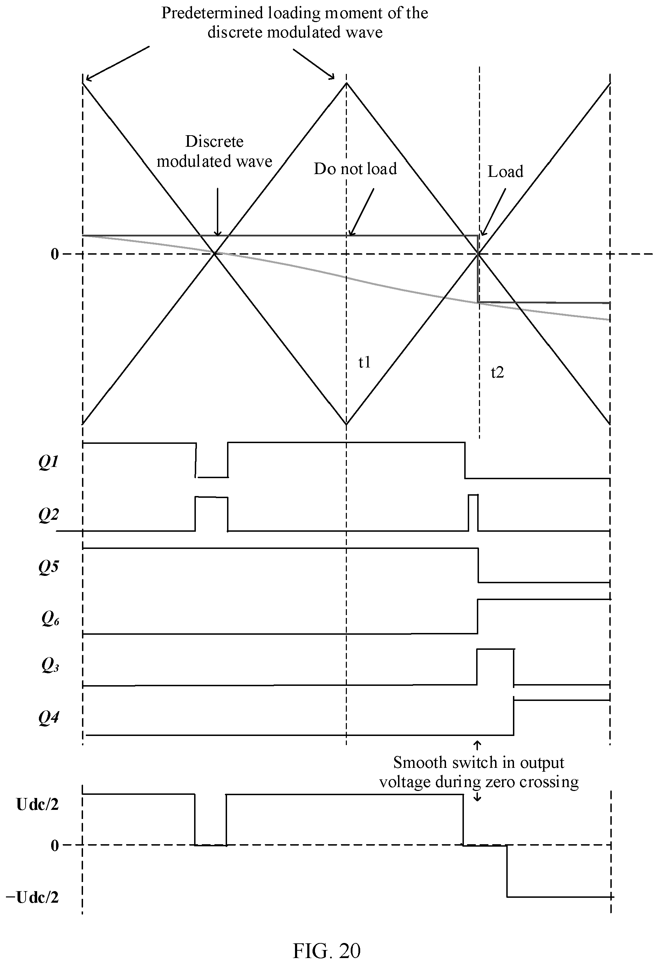

In a feasible implementation, the loading manner of the modulated wave may be N-fold-frequency loading. In this case, in one carrier wave period, the modulated wave includes N loading moments, where N is 1 or an even number greater than or equal to 2. FIG. 16 and FIG. 17 both show a waveform comparison between the modulated wave and the carrier wave, turn-on/turn-off states of the switching transistors, and a change status of the output level of the power converter when the power converter is the three-level ANPC topology and the loading manner of the modulated wave is double-frequency loading. FIG. 18 and FIG. 19 both show a waveform comparison between the modulated wave and the carrier wave, turn-on/turn-off states of the switching transistors, and a change status of the output level of the power converter when the power converter is the three-level NPC topology and the loading manner of the modulated wave is double-frequency loading. FIG. 20 shows a waveform comparison between the modulated wave and the carrier wave, turn-on/turn-off states of the switching transistors, and a change status of the output level of the power converter when the power converter is the three-level NPC topology and the loading manner of the modulated wave is single-frequency loading. In FIG. 16 to FIG. 20, a moment t1 may be the foregoing first loading moment, and a moment t2 is the foregoing second loading moment. It can be seen from these figures that, when the modulated wave is about to undergo zero-crossing switching (also referred to as polarity switching) at the moment t1 and the carrier wave is at a zero-crossing point at the moment t1, the controller in the power converter controls the modulated wave not to be loaded at the moment t1 and controls the modulated wave to be loaded at the moment t2, so that the carrier wave is at a zero-crossing point during actual zero-crossing switching of the modulated wave. In this way, based on a real-time comparison result between the loaded modulated wave and the carrier wave, turn-on/turn-off states of the switching transistors are controlled as described above (as shown in a switching transistor time sequence in a corresponding figure), so that smooth switching can be implemented in the output level of the power converter during zero-crossing switching of the modulated wave, and no large level jump occurs in the output level of the power converter in the peak point region of the carrier wave, thereby reducing stress of the switching transistor.

In embodiments of this application, when the carrier wave is in the peak point region, the controller in the power converter controls the switching transistors of the upper half bridge arm or the switching transistors of the lower half bridge arm to remain in an on/off switching state in the peak point region, and controls to keep the switching transistors of the other half bridge arm not performing an action. This can avoid a large level jump of the output level of the power converter caused by the switching transistors of both the upper half bridge arm and lower half bridge arm performing an action in the peak point region (for example, a direct jump from a positive level to a negative level or a direct jump from a negative level to a positive level in an output level of a three-level converter), so that smooth switching can be performed in the output level of the power converter in a zero-crossing switching process of the modulated wave, thereby reducing stress of the switching transistor in the power converter and improving circuit reliability.

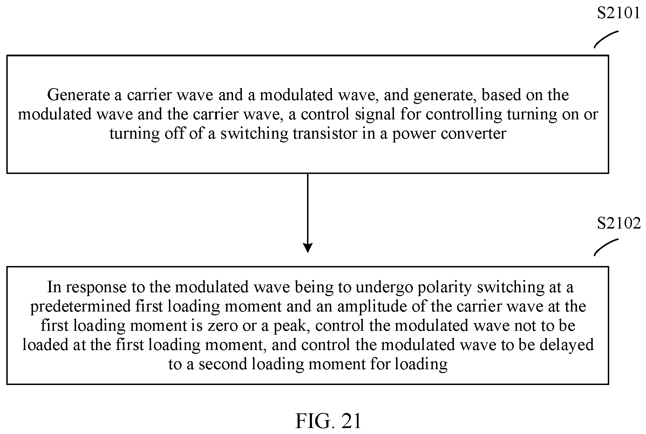

FIG. 21 is a schematic flowchart of a control method for a power converter according to this application. The method may include but is not limited to the following steps.

Step S2101: Generate a carrier wave and a modulated wave, and generate, based on the modulated wave and the carrier wave, a control signal for controlling turning on or turning off of a switching transistor in the power converter.

The method may be implemented in a PWM modulation scheme. In the modulation scheme, a control signal for controlling turning on or turning off of the switching transistor in the power converter may be generated based on a value comparison result between an amplitude of the modulated wave and an amplitude of the carrier wave, so that the power converter can output a required waveform. Herein, the modulated wave may include a sine wave, and the sine wave may include a plurality of discrete square waves. The square wave herein is a waveform whose amplitude is a constant value. In the plurality of square waves, amplitudes of adjacent square waves may be different, and an amplitude change moment of the adjacent square waves is a loading moment of the modulated wave. The carrier wave may be a triangular wave that is in phase opposition disposition.

In a feasible implementation, when the modulated wave is in a positive half period, the carrier wave may be a positive-polarity triangular wave in two groups of triangular waves that are in phase opposition disposition, amplitudes of the modulated wave and the positive-polarity triangular wave are compared, and the positive-polarity triangular wave is above a positive horizontal axis. When the modulated wave is in a negative half period, the carrier wave may be a negative-polarity triangular wave in two groups of triangular waves that are in phase opposition disposition, amplitudes of the modulated wave and the negative-polarity triangular wave are compared, and the negative-polarity triangular wave is below a negative horizontal axis.

In a feasible implementation, the control method may be applied to a multi-level converter, and the multi-level converter may include a three-level converter, a five-level converter, another multi-level converter, or the like. In this case, the power converter may output at least three types of output levels. In a case in which a natural zero-crossing point of the modulated wave is not fixed due to a frequency change of a power grid, and does not correspond to a specific point of the carrier wave, loading the modulated wave causes a large jump of an output level of the power converter, thereby causing excessive stress of the switching transistor.

Step S2102: In response to the modulated wave being to undergo polarity switching at a predetermined first loading moment and an amplitude of the carrier wave at the first loading moment is zero or a peak, control the modulated wave not to be loaded at the first loading moment, and control the modulated wave to be delayed to a second loading moment for loading.

An amplitude of the carrier wave at the second loading moment is different from an amplitude of the carrier wave at the first loading moment, and the amplitude of the carrier wave at the second loading moment is a peak or zero.

In a feasible implementation, in response to an amplitude of the modulated wave being greater than an amplitude of the carrier wave, a high-level control signal is output. This case is hereinafter referred to as Case (1). When Case (1) is met, in response to the amplitude of the carrier wave at the first loading moment being zero, the modulated wave may be controlled not to be loaded at the first loading moment, and the modulated wave may be controlled to be loaded at the second loading moment, where the second loading moment is a moment at which the carrier wave reaches a peak point for the first time after the first loading moment. In this case, a loading manner of the modulated wave may be single-frequency loading, or may be multi-frequency loading. That is, one carrier wave period may include n predetermined loading moments of the modulated wave, where n is 1 or n is an even number greater than or equal to 2. In this way, in Case (1), the modulated wave is controlled to be loaded at the second loading moment, so that the carrier wave is at the peak point during zero-crossing switching of the modulated wave, and smooth switching occurs in the output level of the power converter during zero-crossing switching of the modulated wave, thereby avoiding a large level jump, reducing stress of the switching transistor in the power converter, reducing a possibility of damage to the switching transistor, and improving safety and reliability of the power converter.

In a feasible implementation, in response to an amplitude of the modulated wave being less than an amplitude of the carrier wave, a high-level control signal is output. This case is hereinafter referred to as Case (2). When Case (2) is met, in response to the amplitude of the carrier wave at the first loading moment is a peak, the modulated wave may be controlled not to be loaded at the first loading moment, and the modulated wave may be controlled to be loaded at the second loading moment, where the second loading moment is a moment at which the carrier wave reaches a zero-crossing point for the first time after the first loading moment. In this case, a loading manner of the modulated wave may be single-frequency loading or multi-frequency loading. That is, one carrier wave period may include n predetermined loading moments of the modulated wave, where n is 1 or n is an even number greater than or equal to 2. In this way, in Case (2), the modulated wave is controlled to be loaded at the second loading moment, so that the carrier wave is at the zero-crossing point during zero-crossing switching of the modulated wave, and smooth switching occurs in the output level of the power converter during zero-crossing switching of the modulated wave, thereby avoiding a large level jump, reducing stress of the switching transistor in the power converter, reducing a possibility of damage to the switching transistor, and improving safety and reliability of the power converter.

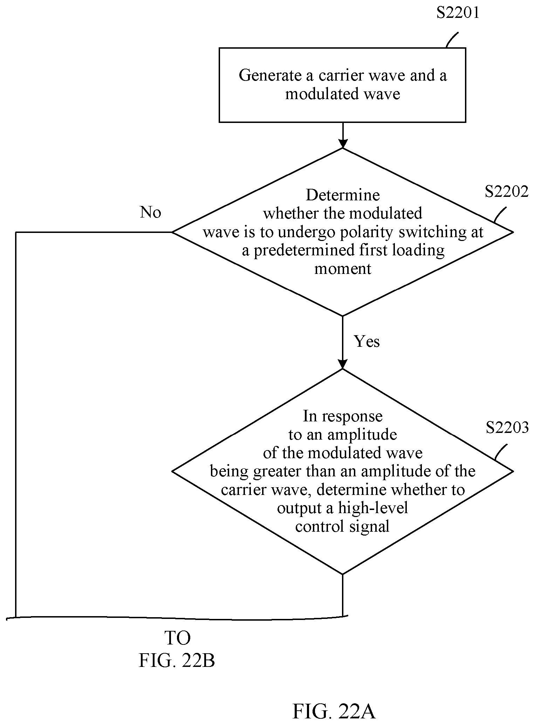

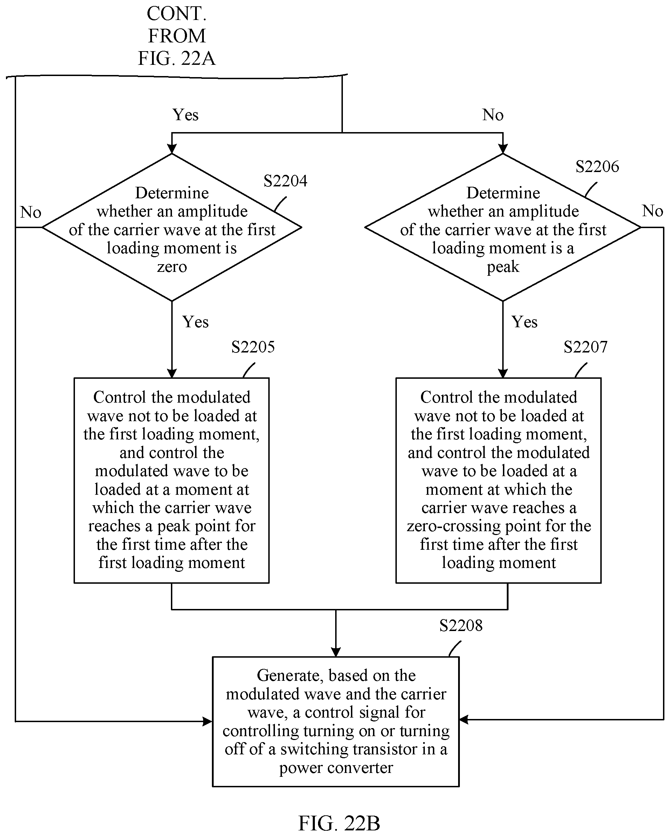

FIG. 22A and FIG. 22B are another schematic flowchart of a control method for a power converter according to this application. The method may include the following steps.

Step S2201: Generate a carrier wave and a modulated wave.

Step S2202: Determine whether the modulated wave is to undergo polarity switching at a predetermined first loading moment. If the modulated wave is to undergo polarity switching at the predetermined first loading moment, step S2203 is performed. If the modulated wave is not to undergo polarity switching at the predetermined first loading moment, step S2208 is performed.

The first loading moment is any one of a plurality of predetermined loading moments, and the modulated wave is to change from positive to negative or from negative to positive at the first loading moment, and zero-crossing switching is to occur. The predetermined plurality of loading moments are determined based on a loading manner of the modulated wave.

Step S2203: In response to an amplitude of the modulated wave being greater than an amplitude of the carrier wave, determine whether to output a high-level control signal. If the high-level control signal is output, step S2204 is performed. If the high-level control signal is not output, step S2206 is performed.

Step S2204: Determine whether an amplitude of the carrier wave at the first loading moment is zero. If the amplitude of the carrier wave at the first loading moment is zero, step S2205 is performed. If the amplitude of the carrier wave at the first loading moment is not zero, step S2208 is performed.

Step S2205: Control the modulated wave not to be loaded at the first loading moment, and control the modulated wave to be loaded at a moment at which the carrier wave reaches a peak point for the first time after the first loading moment.

Step S2206: Determine whether an amplitude of the carrier wave at the first loading moment is a peak. If the amplitude of the carrier wave at the first loading moment is the peak, step S2207 is performed. If the amplitude of the carrier wave at the first loading moment is not the peak, step S2208 is performed.

Step S2207: Control the modulated wave not to be loaded at the first loading moment, and control the modulated wave to be loaded at a moment at which the carrier wave reaches a zero-crossing point for the first time after the first loading moment.

Step S2208: Generate, based on the modulated wave and the carrier wave, a control signal for controlling turning on or turning off of a switching transistor in the power converter.

Specifically, the control signal for controlling turning on or turning off of the switching transistor in the power converter may be generated based on a comparison result between amplitudes of the loaded modulated wave and the carrier wave.

In this embodiment of this application, when the modulated wave is to undergo zero-crossing switching at the predetermined first loading moment and the amplitude of the carrier wave at the first loading moment is zero or a peak, if the modulated wave is still loaded at the first loading moment, a large jump may occur in an output level of the power converter. Therefore, the modulated wave may be controlled not to be loaded at the first loading moment, and the modulated wave is controlled to be delayed to the second loading moment for loading. Because an amplitude of the carrier wave at the second loading moment is different from an amplitude of the carrier wave at the first loading moment, and the amplitude of the carrier wave at the second loading moment is a peak or zero, the carrier wave may be prevented from being at a specific point that causes a large jump of the output level of the power converter during zero-crossing switching of the modulated wave, so that the output level of the power converter can undergo smooth switching in a zero-crossing switching process of the modulated wave, thereby reducing stress of the switching transistor in the power converter, and improving circuit reliability. In addition, a commutation path is changed in the zero-crossing switching process, and the commutation path is short. Therefore, the stress of the switching transistor can be further reduced.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, wherein the power converter comprises a power conversion circuit, an output inductor, and a controller, the power conversion circuit comprises a power bridge arm, the power bridge arm comprises an upper half bridge arm and a lower half bridge arm, each half bridge arm comprises at least two switching transistors, and an output end of the power bridge arm is connected to the output inductor;
the controller is configured to generate a carrier wave and a modulated wave, and generate, based on the carrier wave and the modulated wave, control signals for controlling the switching transistors of the upper half bridge arm and the switching transistors of the lower half bridge arm; and
the controller is further configured to: when the carrier wave is in a zero-crossing point region, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in a zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the zero-crossing point region, wherein the zero-crossing point region comprises an interval in which an amplitude of the carrier wave is less than or equal to a cross value, and the cross value is an amplitude of a cross point that is between the carrier wave and the modulated wave and that is closest to a zero-crossing point of the carrier wave.

2. The power converter according to claim 1, wherein the controller is further configured to: when the carrier wave is in the zero-crossing point region and the modulated wave is about to undergo zero-crossing switching, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in the zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the zero-crossing point region, wherein the zero-crossing point region comprises the interval in which the amplitude of the carrier wave is less than or equal to the cross value, the cross value is the amplitude of the cross point that is between the carrier wave and the modulated wave and that is closest to the zero-crossing point of the carrier wave, and an amplitude of the modulated wave is less than a specified threshold when the modulated wave is about to undergo zero-crossing switching.

3. The power converter according to claim 1 or 2, wherein the carrier wave is a triangular wave, the modulated wave is a sine wave, the sine wave comprises a plurality of discrete square waves, amplitudes of two adjacent square waves in the plurality of square waves are different, and a switching moment between the two adjacent square waves is a loading moment;
the controller is configured to output a high-level control signal in response to the amplitude of the modulated wave being greater than the amplitude of the carrier wave; and
the controller is further configured to: in response to the modulated wave being to undergo polarity switching at a predetermined first loading moment and an amplitude of the carrier wave being zero at the first loading moment, control the modulated wave not to be loaded at the first loading moment, and control the modulated wave to be loaded at a second loading moment, wherein the second loading moment is a moment at which the carrier wave reaches a peak point for the first time after the first loading moment.

4. The power converter according to claim 1 or 2, wherein the power conversion circuit is connected in parallel between a positive direct current bus and a negative direct current bus, the upper half bridge arm and the lower half bridge arm each comprise two switching transistors connected in series, the power conversion circuit further comprises two clamp switching transistors, and the two clamp switching transistors are connected in series and then in parallel between a series connection point between the two switching transistors of the upper half bridge arm and a series connection point between the two switching transistors of the lower half bridge arm; and
when the carrier wave is in the zero-crossing point region, a voltage between a series connection point between the upper half bridge arm and the lower half bridge arm and a series connection point between the two clamp switching transistors is half of a voltage between the positive direct current bus and the negative direct current bus or zero.

5. The power converter according to claim 1 or 2, wherein the power conversion circuit is connected in parallel between a positive direct current bus and a negative direct current bus, the upper half bridge arm and the lower half bridge arm each comprise two switching transistors connected in series, the power conversion circuit further comprises two clamp diodes, and the two clamp diodes are connected in series and then in parallel between a series connection point between the two switching transistors of the upper half bridge arm and a series connection point between the two switching transistors of the lower half bridge arm; and
when the carrier wave is in the zero-crossing point region, a voltage between a series connection point between the upper half bridge arm and the lower half bridge arm and a series connection point between the two clamp diodes is half of a voltage between the positive direct current bus and the negative direct current bus or zero.

6. The power converter according to claim 3, wherein in one carrier wave period, the modulated wave comprises N loading moments, wherein N is 1 or an even number greater than or equal to 2.

7. A power converter, wherein the power converter comprises a power conversion circuit, an output inductor, and a controller, the power conversion circuit comprises a power bridge arm, the power bridge arm comprises an upper half bridge arm and a lower half bridge arm, each half bridge arm comprises at least two switching transistors, and an output end of the power bridge arm is connected to the output inductor;
the controller is configured to generate a carrier wave and a modulated wave, and generate, based on the carrier wave and the modulated wave, control signals for controlling the switching transistors of the upper half bridge arm and the switching transistors of the lower half bridge arm; and
the controller is further configured to: when the carrier wave is in a peak point region, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in a zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the peak point region, wherein the peak point region comprises an interval in which an amplitude of the carrier wave is greater than or equal to a cross value, and the cross value is an amplitude of a cross point that is between the carrier wave and the modulated wave and that is closest to a peak point of the carrier wave.

8. The power converter according to claim 7, wherein the controller is further configured to: when the carrier wave is in the peak point region and the modulated wave is about to undergo zero-crossing switching, control a switching transistor of the upper half bridge arm to keep an on/off switching state unchanged when the carrier wave is in the zero-crossing point region, and control to keep the switching transistors of the lower half bridge arm not performing an action, and control a switching transistor of the upper half bridge arm to perform on/off switching at a moment at which the carrier wave enters the zero-crossing point region; or when the carrier wave is in the zero-crossing point region, control a switching transistor of the lower half bridge arm to keep an on/off switching state unchanged and control to keep the switching transistors of the upper half bridge arm not performing an action, and control a switching transistor of the lower half bridge arm to perform on/off switching at a moment at which the carrier wave enters the peak point region, wherein the peak point region comprises the interval in which the amplitude of the carrier wave is greater than or equal to the cross value, the cross value is the amplitude of the cross point that is between the carrier wave and the modulated wave and that is closest to the peak point of the carrier wave, and an amplitude of the modulated wave is less than a specified threshold when the modulated wave is about to undergo zero-crossing switching.

9. The power converter according to claim 7 or 8, wherein the carrier wave is a triangular wave, the modulated wave is a sine wave, the sine wave comprises a plurality of discrete square waves, amplitudes of two adjacent square waves in the plurality of square waves are different, and a switching moment between the two adjacent square waves is a loading moment;
the controller is configured to output a high-level control signal in response to the amplitude of the modulated wave being less than the amplitude of the carrier wave; and
the controller is further configured to: in response to the modulated wave being to undergo polarity switching at a predetermined first loading moment and an amplitude of the carrier wave being a peak at the first loading moment, control the modulated wave not to be loaded at the first loading moment, and control the modulated wave to be loaded at a second loading moment, wherein the second loading moment is a moment at which the carrier wave reaches a zero-crossing point for the first time after the first loading moment.

10. The power converter according to claim 7 or 8, wherein the power conversion circuit is connected in parallel between a positive direct current bus and a negative direct current bus, the upper half bridge arm and the lower half bridge arm each comprise two switching transistors connected in series, the power conversion circuit further comprises two clamp switching transistors, and the two clamp switching transistors are connected in series and then in parallel between a series connection point between the two switching transistors of the upper half bridge arm and a series connection point between the two switching transistors of the lower half bridge arm; and
when the carrier wave is in the peak point region, a voltage between a series connection point between the upper half bridge arm and the lower half bridge arm and a series connection point between the two clamp switching transistors is half of a voltage between the positive direct current bus and the negative direct current bus or zero.

11. The power converter according to claim 7 or 8, wherein the power conversion circuit is connected in parallel between a positive direct current bus and a negative direct current bus, the upper half bridge arm and the lower half bridge arm each comprise two switching transistors connected in series, the power conversion circuit further comprises two clamp diodes, and the two clamp diodes are connected in series and then in parallel between a series connection point between the two switching transistors of the upper half bridge arm and a series connection point between the two switching transistors of the lower half bridge arm; and
when the carrier wave is in the peak point region, a voltage between a series connection point between the upper half bridge arm and the lower half bridge arm and a series connection point between the two clamp diodes is half of a voltage between the positive direct current bus and the negative direct current bus or zero.

12. The power table converter according to claim 9, wherein in one carrier wave period, the modulated wave comprises N loading moments, wherein N is 1 or an even number greater than or equal to 2.

13. A control method for a power converter, wherein the method comprises:
generating a carrier wave and a modulated wave, and generating, based on the carrier wave and the modulated wave, a control signal for controlling turning on or turning off of a switching transistor in the power converter; and
in response to the modulated wave being to undergo polarity switching at a predetermined first loading moment and an amplitude of the carrier wave being zero or a peak at the first loading moment, controlling the modulated wave not to be loaded at the first loading moment, and controlling the modulated wave to be delayed to a second loading moment for loading, wherein an amplitude of the carrier wave at the second loading moment is different from the amplitude of the carrier wave at the first loading moment, and the amplitude of the carrier wave at the second loading moment is a peak or zero, wherein
the carrier wave is a triangular wave, the modulated wave is a sine wave, the sine wave comprises a plurality of square waves, amplitudes of two adjacent square waves in the plurality of square waves are different, and a switching moment between the two adjacent square waves is a loading moment.

14. The method according to claim 13, wherein the method further comprises:
outputting a high-level control signal in response to an amplitude of the modulated wave being greater than an amplitude of the carrier wave; and
in response to the amplitude of the carrier wave at the first loading moment being zero, controlling the modulated wave not to be loaded at the first loading moment, and controlling the modulated wave to be loaded at the second loading moment, wherein the second loading moment is a moment at which the carrier wave reaches a peak point for the first time after the first loading moment.

15. The method according to claim 13, wherein the method further comprises:
outputting a high-level control signal in response to an amplitude of the modulated wave being less than an amplitude of the carrier wave; and
in response to the amplitude of the carrier wave at the first loading moment being a peak, controlling the modulated wave not to be loaded at the first loading moment, and controlling the modulated wave to be loaded at the second loading moment, wherein the second loading moment is a moment at which the carrier wave reaches a zero-crossing point for the first time after the first loading moment.
